(19) **Europäisches Patentamt**
**European Patent Office**
**Office européen des brevets**

(11) **EP 4 478 629 B1**

(12) # EUROPEAN PATENT SPECIFICATION

(45) Date of publication and mention
of the grant of the patent:
**29.04.2026 Bulletin 2026/18**

(21) Application number: **22930599.0**

(22) Date of filing: **11.11.2022**

(51) International Patent Classification (IPC):
*H04B 10/079* (2013.01)   *H04J 14/02* (2006.01)
*G06N 20/20* (2019.01)

(52) Cooperative Patent Classification (CPC):
**H04B 10/0795; G06N 20/20; H04J 14/0227**

(86) International application number:
**PCT/CN2022/131433**

(87) International publication number:
**WO 2023/168976 (14.09.2023 Gazette 2023/37)**

---

(54) **OPTICAL TRANSPORT NETWORK PERFORMANCE PREDICTION METHOD AND SYSTEM, ELECTRONIC DEVICE, AND STORAGE MEDIUM**

VERFAHREN UND SYSTEM ZUR VORHERSAGE DER LEISTUNG EINES OPTISCHEN TRANSPORTNETZWERKS, ELEKTRONISCHE VORRICHTUNG UND SPEICHERMEDIUM

PROCÉDÉ ET SYSTÈME DE PRÉDICTION DE PERFORMANCES DE RÉSEAU DE TRANSPORT OPTIQUE, DISPOSITIF ÉLECTRONIQUE ET SUPPORT DE STOCKAGE

---

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.03.2022 CN 202210234032**

(43) Date of publication of application:
**18.12.2024 Bulletin 2024/51**

(73) Proprietor: **ZTE Corporation**
**Shenzhen, Guangdong 518057 (CN)**

(72) Inventors:
• **WANG, Dajiang**
**Shenzhen, Guangdong 518057 (CN)**
• **ZHOU, Xiaohui**
**Shenzhen, Guangdong 518057 (CN)**
• **WANG, Qilei**
**Shenzhen, Guangdong 518057 (CN)**
• **BO, Kaitao**
**Shenzhen, Guangdong 518057 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

(56) References cited:
WO-A1-2021/238505    WO-A1-2022/062724
CN-A- 113 258 995    CN-A- 113 515 837
US-B1- 11 190 266

• PANAYIOTOU TANIA ET AL: "Centralized and Distributed Machine Learning-Based QoT Estimation for Sliceable Optical Networks", 2019 IEEE GLOBAL COMMUNICATIONS CONFERENCE (GLOBECOM), IEEE, 9 December 2019 (2019-12-09), pages 1 - 7, XP033722626, DOI: 10.1109/GLOBECOM38437.2019.9013962
• YAN BOYUAN ET AL: "First Demonstration of Imbalanced Data Learning-Based Failure Prediction in Self-Optimizing Optical Networks with Large Scale Field Topology", 2018 ASIA COMMUNICATIONS AND PHOTONICS CONFERENCE (ACP), IEEE, 26 October 2018 (2018-10-26), pages 1 - 4, XP033486682, DOI: 10.1109/ACP.2018.8595733

---

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

Embodiments of the present application relate to the field of communications, and in particular, to a method and a system for predicting performance of an optical transmission network, an electronic device and a storage medium.

### BACKGROUND

With the development of communication technology, the global communication industry is moving from the Internet era and the cloud era to the intelligent era. New opportunities and new challenges are driving the network to accelerate comprehensive transformation and upgrading. In order to realize the digital transformation of operator networks and provide vertical industries and consumer users with zero-wait, zero-contact, and zero-failure services and user experiences, self-intelligent network technology was proposed to create self-configuration, self-repair and self-optimizing network capabilities for the entire life cycle of operator network operations. In order to realize the digital transformation of the network, it is necessary to establish a digital mirror of the internal and external environment of the network and integrate capabilities such as simulation and prevention prediction. How to establish such a simulation network is an urgent problem that needs to be solved. A performance predicting model acording to the state of the art is known from PANAYIOTOU TANIA ET AL: "Centralized and Distributed Machine Learning-Based QoT Estimation for Sliceable Optical Networks",2019 IEEE GLOBAL COMMUNICATIONS CONFERENCE (GLOBECOM), IEEE, 9 December 2019, as well as from YAN BOYUAN ET AL: "First Demonstration of Imbalanced Data Learning-Based Failure Prediction in Self-Optimizing Optical Networks with Large Scale Field Topology",2018 ASIA COMMUNICATIONS AND PHOTONICS CONFERENCE (ACP), IEEE, 26 October 2018.

### SUMMARY

The main purpose of embodiments of the present application is to propose a method and a system for predicting performance of an optical transmission network, an electronic device and a storage medium, which can realize the establishment of a simulated network for establishing an optical transport network. In order to achieve the above purpose, the embodiments of the present application provide a method for predicting performance of an optical transmission network, applied to a single-domain management server, including:

> obtaining a performance prediction model;

> obtaining model update information of the performance prediction model through horizontal federated learning technology, the model update information is obtained by training the performance prediction model based on performance data of each network element in a single domain, and is configured to update the performance prediction model; and

> reporting the model update information and single-domain topology information to a multi-domain management server, so that the multi-domain management server generates an optical transport network digital twin model based on the model update information and the single-domain topology information, the optical transport network digital twin model is configured to predict performance of the optical transmission network.

In order to achieve the above purpose, the embodiments of the present application further provide a method for predicting performance of an optical transmission network, applied to a multi-domain management server, including:

> obtaining model update information and single-domain topology information reported by a single-domain management server, the model update information is obtained by training performance prediction model of the single-domain management server based on performance data of each network element in a single domain through horizontal federated learning technology and is configured to update the performance prediction model; and

> generating an optical transport network digital twin model based on the model update information and the single-domain topology information, the optical transport network digital twin model is configured to predict performance of an optical transport network.

In order to achieve the above purpose, the embodiments of the present application further provide a system for predicting performance of an optical transmission network, including:

a single-domain management server and a multi-domain management server;

the single-domain management server is communicated with the multi-domain management server;

the single-domain management server is configured to obtain a performance prediction model, obtain model update information of the performance prediction model through horizontal federated learning technology, the model update information is obtained by training the performance prediction model based on performance data of each network element in a single domain; report the model update information and single-domain topology information to the multi-domain management server, so that the multi-domain management server generates an optical transport network digital twin model; and

the multi-domain management server is configured to obtain the model update information and the single-domain topology information reported by the single-domain management server; and generate the optical transport network digital twin model according to the model update information and the single-domain topology information. The model update information is obtained by training performance prediction model of the single-domain management server based on performance data of each network element in a single domain through the horizontal federated learning technology. The optical transport network digital twin model is configured to predict performance of an optical transport network.

The embodiments of the present application further provide an electronic device, including:

at least one processor; and

a memory communicated with the at least one processor;

an instruction executable by the at least one processor is stored in the memory, and the instruction is executed by the at least one processor to enable the at least one processor to perform the method for predicting performance of the optical transmission network as described above.

The embodiments of the present application further provide a computer-readable storage medium in which a computer program is stored, when the computer program is executed by a processor, the method for predicting performance of the optical transmission network as described above is implemented.

In the method for predicting performance of the optical transmission network of the present application, the model update information is obtained through a single-domain management server and is reported to a multi-domain management server. The multi-domain management server finally generates an optical transport network digital twin model. That is, horizontal federated learning is configured to overcome the training difficulties caused by data distribution in each single domain. Since the model update information is obtained after training the performance prediction model based on the performance data of each network element in the single domain, based on the model update information, the update of the performance prediction model can be more consistent with the actual processing capabilities of the actual network element. Therefore, the single-domain management server reports the model update information and single-domain topology information to the multi-domain management server. The multi-domain management server can generate an optical transport network digital twin model based on the updated performance prediction model. This optical transport network digital twin model is also a model that is consistent with the actual processing and transmission capabilities in the optical transport network, thereby realizing the establishment of a simulation network for establishing the optical transport network.

## BRIEF DESCRIPTION OF THE DRAWINGS

FIG. 1 is a schematic flowchart of applying a method for predicting performance of an optical transmission network to a single-domain management server according to an embodiment of the present application.

FIG. 2 is a schematic diagram 1 of the architecture of a system for predicting performance of an optical transmission network according to an embodiment of the present application.

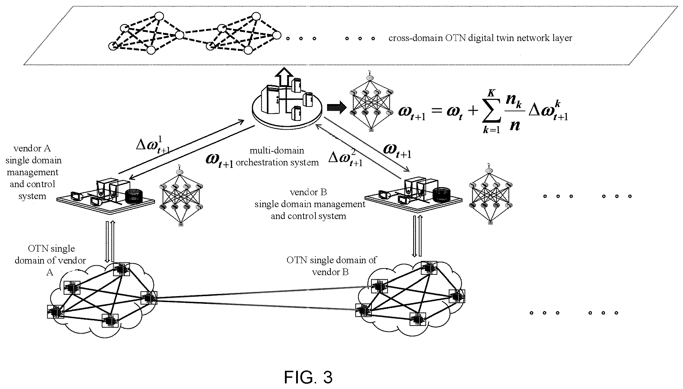

FIG. 3 is a schematic diagram 2 of the architecture of the optical transport network performance prediction system according to an embodiment of the present application.

FIG. 4 is a schematic structural diagram of a network element according to an embodiment of the present application.

FIG. 5 is a schematic diagram of a performance prediction model according to an embodiment of the present application.

FIG. 6 is a schematic diagram of performance data sampling according to an embodiment of the present application.

FIG. 7 is a schematic flowchart 1 of a performance prediction model training method according to an embodiment of the present application.

FIG. 8 is a schematic flowchart 2 of the performance prediction model training method according to an embodiment of the present application.

FIG. 9 is a schematic flowchart 3 of the performance prediction model training method according to an embodiment of the present application.

FIG. 10 is a schematic flowchart 4 of the performance prediction model training method according to an embodiment of the present application.

FIG. 11 is a schematic flowchart of applying the method for predicting performance of the optical transmission network to a multi-domain management server according to an embodiment of the present application.

FIG. 12 is a schematic structural diagram of the optical transport network performance prediction system according to an embodiment of the present application.

FIG. 13 is a schematic structural diagram of an electronic device according to an embodiment of the present application.

## DETAILED DESCRIPTION OF THE EMBODIMENTS

In order to make the purpose, technical solutions and advantages of the embodiments of the present application clearer, each embodiment of the present application will be described in detail below with reference to the accompanying drawings. However, those skilled in the art can understand that in each embodiment of the present application, many technical details are provided to enable readers to better understand the present application. However, even without these technical details and various changes and modifications based on the following embodiments, the technical solution claimed in the present application can also be implemented. The division of the following embodiments is for the convenience of description and should not constitute any limitation on the specific implementation of the present application. The various embodiments can be combined with each other and referenced with each other on the premise that there is no contradiction.

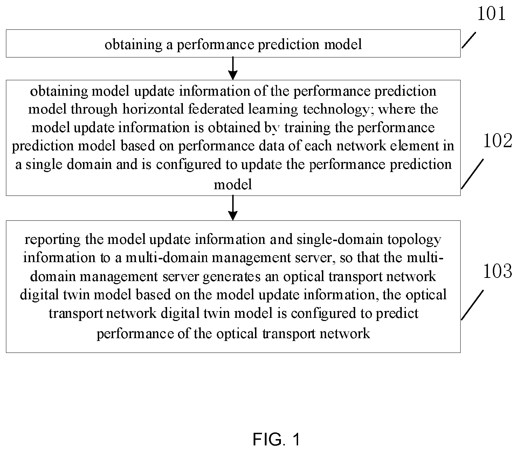

The embodiment of the present application relates to a method for predicting performance of an optical transmission network, as shown in FIG. 1, including:

Step 101, obtaining a performance prediction model;

Step 102, obtaining model update information of the performance prediction model through horizontal federated learning technology; where the model update information is obtained by training the performance prediction model based on performance data of each network element in a single domain and is configured to update the performance prediction model; and

Step 103, reporting the model update information and single-domain topology information to a multi-domain management server, so that the multi-domain management server generates an optical transport network digital twin model based on the model update information, the optical transport network digital twin model is configured to predict performance of the optical transport network.

The method for predicting performance of the optical transmission network in this embodiment is applied to a single-domain management server. The single-domain management server is a management server that manages each network element in a domain in the optical transport network. Each single-domain management server can run the single-domain management and control system of the vendor corresponding to this single-domain. The optical transport network (OTN for short) can be divided into different management domains in the horizontal direction. A single management domain can be composed of the OTN device of a single device vendor, or can be composed of a certain network or subnetwork of the operator. The single management domain is a single domain. There is a single-domain management server in each single domain, which is configured to communicate with the multi-domain management server. A multi-domain orchestration system can be run on multiple single-domain management servers to generate the optical transport network digital twin model. The optical transport network digital twin model can predict the performance of the optical transport network or implement other data simulation needs.

The global communications industry is moving from the Internet era and the cloud era to the intelligent era. New opportunities and new challenges are driving the network to accelerate comprehensive transformation and upgrading. Against this background, the concept of autonomous networks (AN) was proposed in 2019. The AN concept aims to enable the digital transformation of operator networks through the integration of network technology and digital technology, provide zero-wait, zero-contact, and zero-fault services and user experience for vertical industries and consumer users, and create self-configuration, self-repair and self-optimization network capabilities for the entire life cycle of operators' network operations. In order to realize AN, digital twins (DT) technology was proposed and is considered by the industry to be the foundation of digital transformation and an important support and component for realizing AN architecture and technology. By accurately sensing the status of itself and the external environment, the network digital twin establishes a digital mirror of the internal and external environment, integrates capabilities such as simulation and preventive prediction, and can play a crucial enabling role in scenarios such as "low-cost trial and error", "intelligent decision-making", and "predictive maintenance".

Digital twin, or DT technology, can be understood as - building a digital (virtual) model of a physical object in a digital space, and using data from the physical object to continuously modify the model and update the model status to make it consistent with the physical object throughout its life cycle, and can mirror the real-time operating status of the physical object with high fidelity, the model becomes a digital twin of the physical object (referred to as digital twin). Based on digital twins, monitoring, analysis, prediction, diagnosis, training, and simulation can be performed, and simulation results can be fed back to physical objects to help optimize and make decisions on physical objects. Related technologies involving digital twin model construction, real-time updating of digital model status, digital twin-based simulation analysis and control decision-making can be collectively referred to as digital twin DT technology. It can be seen from this that how to combine the structural characteristics and status characteristics of the physical objects mirrored by the twin and the application scenarios of DT to build a DT model is the key technology of DT.

Under the AN architecture, it is necessary to build a DT network model and generate the OTN DT network layer in the OTN multi-domain complex network environment, so as to realize the analysis capability of the entire network OTN through DT technology. The DT network layer is a model abstraction of the entire cross-domain physical network. Communication between DT network elements is not limited by physical network space, and the visibility and operability of DT network elements are not subject to space restrictions and management and control restrictions such as physical network domain division. This requires the OTN DT model to have the ability for a general abstract description of the functional mechanisms of physical network elements and network element devices in each domain.

Taking the OTN performance prediction algorithm modeling belonging to the DT-aware algorithm model in a single-domain OTN network domain as an example. The network element devices come from different device vendors. Although each network element device has the same network element operation function in the same network domain environment, the device batches, models, service years and other attributes of each network element are different, resulting in different optical performance changes of equipment, devices, optical fibers and other devices in actual operation and use. The DT performance prediction model obtained by sampling and training only some network elements or a single network element device can only reflect the performance change characteristics of this part of network elements or this network element. It is not universally applicable to other network element devices in a single domain or other cross-domain network element devices, and has poor generalization ability. It is prone to over-fitting and other problems during the reasoning process, which results in low accuracy and insufficient authoritativeness of OTN network performance prediction analysis. However, if the performance data of each network element in each domain is reported to the multi-domain orchestration system for unified training, there is also the problem of data privacy leakage: since each OTN physical network domain comes from the single-domain management and control system of different equipment vendors, when building a cross-domain digital twin layer model training, each physical single domain has data privacy requirements, and it is inconvenient to directly report the OTN network performance data within each domain to the multi-domain orchestration system for unified training. How to solve the overfitting problem of the performance prediction function model caused by local training, and at the same time solve the problem of sample data privacy leakage caused by centralized training, has become a bottleneck in OTNDT case functional model modeling and needs to be solved urgently. The emergence of federated learning technology provides an effective way to solve the above problems.

The modeling pain points that federated learning can overcome are: 1. Data does not leave the local area: due to data security and privacy protection, the problem of data not leaving the local area and being unable to be aggregated is prominent; 2. Model generalization ability: the problem of weak model generalization ability due to the small annotated training data set; 3. Model training efficiency: the model training efficiency problem is caused by placing too much emphasis on centralized cloud computing training and ignoring the computing capabilities of edge devices.

The advantages of federated learning are: 1. Only local data is used for training, the data itself is not exchanged, and updated model parameters are exchanged in an encrypted manner; 2. Data of the device in different environments (time and location) is utilized for model training, the public model is updated and sent to the device to improve the model generalization ability; and 3. The computing power of edge devices is utilized for parallel training to improve model training efficiency.

The process of horizontal federated learning includes: Step 1, Each participant locally calculates the model gradient, uses encryption technologies such as homomorphic encryption, differential privacy or secret sharing to mask the gradient information, and send the masked results (referred to as encryption for short) gradient) to the aggregation server; Step 2, The server performs a secure aggregation operation, such as using a weighted average based on homomorphic encryption; and Step 3, The server sends the aggregated results to each participant. Step 4, Each participant decrypts the received gradient and uses the decrypted gradient results to update their respective model parameters. In summary, the present application proposes a method and mechanism for constructing an OTN DT network function model using horizontal federated learning technology.

In the method for predicting performance of the optical transmission network of the present application, the model update information is obtained through a single-domain management server and is reported to a multi-domain management server. The multi-domain management server finally generates an optical transport network digital twin model. That is, horizontal federated learning is configured to overcome the training difficulties caused by data distribution in each single domain. Since the model update information is obtained after training the performance prediction model based on the performance data of each network element in the single domain, based on the model update information, the update of the performance prediction model can be more consistent with the actual processing capabilities of the actual network element. Therefore, the single-domain management server reports the model update information and single-domain topology information to the multi-domain management server. The multi-domain management server can generate an optical transport network digital twin model based on the updated performance prediction model. This optical transport network digital twin model is also a model that is consistent with the actual processing and transmission capabilities in the optical transport network, thereby realizing the establishment of a simulation network for establishing the optical transport network.

The implementation details of the method for predicting performance of the optical transmission network in this embodiment are described in detail below. The following content is only implementation details provided for convenience of understanding and is not necessary to implement this solution.

At step 101, the single-domain management server obtains the performance prediction model. The performance prediction model can be pre-stored in the single-domain management server, or can be obtained by the single-domain management server from the multi-domain management server or other electronic devices.

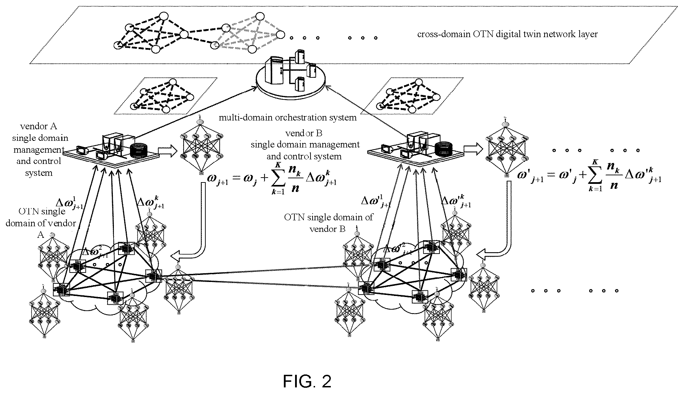

In an embodiment, as shown in FIG. 2, the method for predicting performance of the optical transmission network can be applied in a scenario where each network element in the single domain has training capabilities (hereinafter referred to as solution A). In solution A, the performance prediction model can be a single-domain performance prediction model, and the model update information can be a single-domain digital twin model obtained based on the updated single-domain performance prediction model. The single-domain management server obtains the model update information of the performance prediction model in the following manner: sending the single-domain performance prediction model to each network element in this single domain and obtaining the parameter update amount of the single-domain performance prediction model reported by each network element, each network element trains the single-domain performance prediction model separately based on local performance data and calculates the parameter update amount; updating the parameters of the single-domain performance prediction model according to the parameter update amount reported by each network element to obtain the updated single-domain performance prediction model, according to the updated single-domain performance prediction model and the single-domain topology information of this single domain to obtain the single-domain digital twin model.

In this embodiment, by using the single-domain performance prediction model as the performance prediction model and using the single-domain digital twin model obtained based on the updated single-domain performance prediction model as the model update information, the single-domain management server can send the single-domain performance prediction model to each network element in this single domain, and each network element trains the single-domain performance prediction model respectively, so that the updated single-domain performance prediction model fits the performance characteristics of each network element and can solve the problem of different device batches, models, service years and other attributes of each network element, resulting in poor generalization ability of performance prediction model training, and prone to over-fitting and other problems during the inference process, and achieve strong generalization ability, high prediction accuracy and other effects of the performance prediction model.

In another embodiment, the method for predicting performance of the optical transmission network can be applied to a scenario in a single domain where only the single-domain management server has the training capability and other network elements do not have the training capability (hereinafter referred to as solution B). In solution B, the performance prediction model can be a network performance prediction model, and the model update information can be the parameter update amount of the network performance prediction model. The single-domain management server can obtain the model update information of the performance prediction model in the following ways: according to the performance data of each network element, the network performance prediction model is trained to obtain the parameter update amount of the network performance prediction model; the parameter update amount of the network performance prediction model is used to report to the multi-domain management server, and the multi-domain management server updates the network performance prediction model according to the parameter update amount of the network performance prediction model.

In this embodiment, by using the network performance prediction model as the performance prediction model and using the parameter update amount of the network performance prediction model as the model update information, the single-domain management server can train the network performance prediction model on its own according to the performance data of each network element to obtain the parameter update amount of the network performance prediction model. The multi-domain management server integrates the parameter update amount of the network performance prediction model of each single-domain to update the network performance prediction model. The single-domain management server performs model training, which can reduce the number of devices required for training, and save computing resources. Even in scenarios where computing resources are scarce, the method for predicting performance of the optical transmission network can be implemented. At the same time, it can also solve the problem of different device batches, models, service years and other attributes of each network element, resulting in poor generalization ability of performance prediction model training, and prone to problems such as overfitting during the inference process. Therefore, strong generalization ability and high prediction accuracy of the performance prediction model can be realized.

At step 102, the single-domain management server obtains the model update information of the performance prediction model. The model update information is obtained after training the performance prediction model based on the performance data of each network element in the single domain, and is configured to update the performance prediction model. The model update information can be calculated by the single-domain management server or other network elements in the single domain where the single-domain management server is located.

In an embodiment, the performance prediction model is updated according to the following formula:

$$\omega_{j+1} = \omega_j + \sum_{k=1}^{K} \frac{n_k}{n} \Delta\omega_{j+1}^{k}$$

Assuming that there are a total of K devices updating the performance prediction model in a horizontal federated learning manner, the performance data sampling sequence set of each device is $P_k$ and $\left( x_{(0\ldots t)}^{i}, y_{t+1}^{i} \right), i \in P_k$. $y_{t+1}^{i}$ is the performance data prediction vector provided by device k for the i-th sample sequence at time (t+1). $x_t^{i}$ is the performance data vector of the i-th sample sequence at time t. The sample sequence refers to a set of samples sampled in time series from time 0 to time t for the same prediction object. A sampling period of the sample sequence is $[0\ldots t, t+1]$, the number of sample sequences is $n_k = |P_k|$, then the total number of sample sequences in the single domain is $n = \sum_{k=1}^{K} n_k$. $\omega_j$ and $\omega_{j+1}$ are the parameter values obtained by the performance prediction model after the j-th round of iteration and the (j+1)-th round of iteration, respectively. $\omega_{j+1}^{k}$ is the parameter value of the performance prediction model obtained by the (j+1)-th round of iteration of the device k during the horizontal federated learning process. $\Delta\omega_{j+1}^{k} = \omega_{j+1}^{k} - \omega_j = -ag_k$ is the parameter update amount from the parameter $\omega_j$ to parameter $\omega_{j+1}$ of the performance prediction model calculated by the device k, $a$ is the learning rate of the performance prediction model, and $g_k$ is the gradient of $\omega_j$. The device k is a network element node in solution A, and is the single-domain management server in solution B.

Specifically, the update of the performance prediction model is implemented based on the loss function between $y_{t+1}^{i}$ and the actual performance data vector $f_{t+1}^{i}$ at time (t+1) and $F_k(\omega)$, where

$$F_k(\omega) = \sum_{i=1}^{n_k} (f_{t+1}^{i} - y_{t+1}^{i})^2$$

The performance data vector $x_t^{i}$ is sampled from the four dimensions of input optical power $a_i$, output optical

power $b_i$, receiving end optical attenuation $c_i$, and receiving end optical signal-to-noise ratio $d_i$. The performance data vector is sampled by any of the following three methods.

The first method is to sequentially sample the performance values of each optical layer link in the same sampling period from the four dimensions, and perform a weighted summation convolution feature extraction process on the performance values of each dimension. $x_t^i$ and $y_{t+1}^i$ obtained by the convolution feature extraction process are as follows:

$$x_t^i = \begin{bmatrix} a_t'^i \\ b_t'^i \\ c_t'^i \\ d_t'^i \end{bmatrix} \qquad y_{t+1}^i = \begin{bmatrix} a_{t+1}'^i \\ b_{t+1}'^i \\ c_{t+1}'^i \\ d_{t+1}'^i \end{bmatrix}$$

where $a' = \sum_{i=1}^{m} \alpha_i a_i$ $b' = \sum_{i=1}^{m} \beta_i b_i$ $c' = \sum_{i=1}^{m} \gamma_i c_i$ $d' = \sum_{i=1}^{m} \eta_i d_i$, $\alpha_i$, $\beta_i$, $\gamma_i$ and $\eta_i$ are the preset parameters in the convolution feature extraction processing operation, and m is the number of optical layer links in the device k.

The second method is to concatenate the performance values of the four dimensions of each optical layer link at time t into a long vector, and the resulting $x_t^i$ and $y_{t+1}^i$ are as follows:

$$x_t^i = \begin{bmatrix} a_{1t}^i \\ b_{1t}^i \\ c_{1t}^i \\ d_{1t}^i \\ \cdots \\ a_{mt}^i \\ b_{mt}^i \\ c_{mt}^i \\ d_{mt}^i \end{bmatrix} \qquad y_{t+1}^i = \begin{bmatrix} a_{1t+1}^i \\ b_{1t+1}^i \\ c_{1t+1}^i \\ d_{1t+1}^i \\ \cdots \\ a_{mt+1}^i \\ b_{mt+1}^i \\ c_{mt+1}^i \\ d_{mt+1}^i \end{bmatrix}$$

m is the number of optical layer links in the device k, and $a_{1t}^i$ is m=1, that is, the $a_i$ value of the first optical layer link at time t, and the same applies to $b_{1t}^i$, $c_{1t}^i$, $d_{1t}^i$, $a_{mt}^i$ ..., $d_{mt}^i$.

The third method is to randomly sample the performance values of the four dimensions of each optical layer link, where the performance values of the same sample sequence at different times in the same time period come from the same optical layer link.

At step 103, the single-domain management server reports the model update information and single-domain topology information to the multi-domain management server, so that the multi-domain management server generates an optical transport network digital twin model based on the model update information and single-domain topology information. The optical transport network digital twin model is configured to predict the performance of the optical transport network. After receiving the model update information and single-domain topology information reported by multiple single-domain management servers, the multi-domain management server generates the optical transport network digital twin model. The optical transport network digital twin model is a digital twin model of the entire optical transport network, that is, the digital twin model including reported multiple single domains, to perform digital simulation of the optical transport network.

In an embodiment, the parameters of the single-domain performance prediction model are updated according to the parameter update amount reported by each network element, and the updated single-domain performance prediction model is obtained. The single-domain management server specifically needs to iteratively update the single-domain performance prediction model. The iterative update includes: delivering the updated single-domain performance prediction model to each network element in the single domain, obtaining the parameter update amount reported again by each network element, and updating the single-domain performance prediction model according to the re-reported parameter update amount and initiating the next round of iterative updates until the conditions for stopping iteration are met. The conditions for stopping iteration include: the parameter update amount of the performance prediction model converges.

In this embodiment, by iteratively updating the single-domain performance prediction model, the prediction effect of the single-domain performance prediction model is more consistent with the actual performance of the device, and the single-domain performance prediction model is updated, so that the optical transport network digital twin model generated by the multi-domain management server has better simulation results.

In an embodiment, the parameters of the single-domain performance prediction model are updated according to the parameter update amount reported by each network element, and are implemented according to the following formula:

$$\omega_{j+1} = \omega_j + \sum_{k=1}^{K} \frac{n_k}{n} \Delta\omega_{j+1}^k$$

Assuming that there are K network elements in the single domain, the performance data sampling sequence set of each network element is $P_k$ and $(x_{(0...t)}^i, y_{t+1}^i), i \in P_k$, $y_{t+1}^i$ is the performance data prediction vector for the i-th sample sequence by the network element k at time (t+1), and $x_t^i$ is the performance data vector of the i-th sample sequence at time t. The sample sequence refers to the sample set sampled in time series from time 0 to time t for the same prediction object. The sampling period of a sample sequence is $[0...t, t+1]$, and the sample sequence amount is $n_k = |P_k|$.

The total number of sample sequences in the single domain is $n = \sum_{k=1}^{K} n_k$.

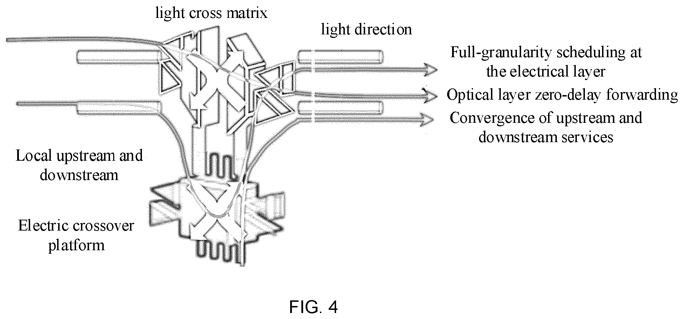

In a specific embodiment, the network element structure of each single domain in OTN is shown in FIG. 4. It is assumed that the OTN network element node k has 6 optical layer links, and its main optical layer transmission performance parameters include incoming optical power, outgoing optical power, receiving end light attenuation and optical signal noise ratio (OSNR), the performance parameters are shown in the following table:

|  | Link1 | Link2 | Link3 | Link4 | Link5 | Link6 |
|---|---|---|---|---|---|---|
| incoming optical power | a1 | a2 | a3 | a4 | a5 | a6 |
| outgoing optical power | b1 | b2 | b3 | b4 | b5 | b6 |
| receiving end light attenuation | c1 | c2 | c3 | c4 | c5 | c6 |
| receiving end OSNR | d1 | d2 | d3 | d4 | d5 | d6 |

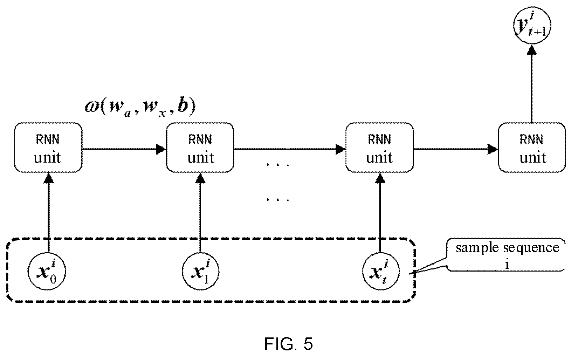

Taking the recurrent neural network (RNN) model as an example, the performance prediction function model modeling is shown in FIG. 5. The RNN model parameters are $\omega(w_a, w_x, b)$, the performance data sampled in each cycle in the sample sequence is input to the RNN model for model training, where $y_{t+1}^i$ is the performance data prediction vector for the i-th sample sequence of the network element k at time (t+1), $x_t^i$ is the performance data vector of the i-th sample sequence at time t, and the RNN algorithm model parameters need to be improved in the direction of reducing loss of the prediction vector $y_{t+1}^i$. The average formula $F_k(\omega)$ of the performance prediction loss function sum obtained through the RNN algorithm model after the network element node (i.e., network element) k samples nk sample sequences is as follows:

$$F_k(\omega) = \frac{1}{n_k} \sum_{i=1}^{n_k} (f_{t+1}^i - y_{t+1}^i)^2$$

Where $f_{t+1}^i$ is the sample mark vector of performance prediction for the i-th performance data sample sequence (hereinafter referred to as the sample sequence) by network element node k at time (t+1), and $g_k = \nabla F_k(\omega_j)$ is the performance prediction loss function of network element node k after sampling nk sample sequences and the gradient of the parameters $\omega_j$ of the jth iteration of the public model for performance prediction of the vendor's management and control system. $\Delta\omega_{j+1}^k = \omega_{j+1}^k - \omega_j = -ag_k$ is the model parameter update amount of the network element uploaded to the vendor's management and control system (i.e., single-domain management server) by the (j+1)th round of iteration of network element node k, and $a$ is the learning rate of the model. The loss function of the OTN optical layer performance prediction RNN algorithm public model of the OTN single-domain management and control system of this vendor is the average of the cumulative sum of the performance prediction loss functions of the RNN algorithm model of each network element node in this network domain (i.e., single domain), and is defined as:

$$f(\omega) = \sum_{k=1}^{K} \frac{n_k}{n} F_k(\omega)$$

The objective function of the public model training of the OTN optical layer performance prediction RNN algorithm of the vendor's OTN single-domain management and control system is $\min_{\omega} f(\omega)$, and the model parameters obtained by the (j+1)th round of iteration update of the OTN optical layer performance prediction RNN algorithm public model of the vendor's OTN single-domain management and control system are:

$$\omega_{j+1} = \omega_j + \sum_{k=1}^{K} \frac{n_k}{n} \Delta\omega_{j+1}^{k}$$

Considering optical layer link performance vector sampling, due to network structure design reasons, the number of optical layer links of each network element node is different from each other. In order to ensure the consistency requirements of horizontal federated learning on sample feature vector dimensions and element attributes, and then ensure the consistency of RNN model inputs for all network element nodes and single-domain management and control systems, the following three sampling schemes are designed for solutions A and B.

Sampling method 1, "zero padding in series": taking node (i.e., network element) k as an example, the performance vectors of six optical layer links contained in node k at time t can be concatenated to construct a long vector as input of the RNN at time t, the sample of the ith sample sequence at time t is expressed as:

$$x_t^i = \begin{bmatrix} a_{1t}^i \\ b_{1t}^i \\ c_{1t}^i \\ d_{1t}^i \\ \cdots \\ a_{mt}^i \\ b_{mt}^i \\ c_{mt}^i \\ d_{mt}^i \end{bmatrix} \qquad y_{t+1}^i = \begin{bmatrix} a_{1t+1}^i \\ b_{1t+1}^i \\ c_{1t+1}^i \\ d_{1t+1}^i \\ \cdots \\ a_{mt+1}^i \\ b_{mt+1}^i \\ c_{mt+1}^i \\ d_{mt+1}^i \end{bmatrix}$$

where $x_t^i$ is the link performance vector sample of the i-th sample sequence of node k at time t, and the length of this vector is 4*m dimensions. Here, m represents the maximum number of optical layer links deployed on a single node in this domain. At this time, if the number of links on node k is less than m, that is, m>6, the remaining 4*(m-6)-dimensional elements of the vector will be filled with zeros. $y_{t+1}^i$ is the link performance prediction value for the i-th sample sequence by node k at time (t+1). The length of this vector is 4*m dimensions. Here, m represents the maximum number of optical layer links deployed on a single node in this domain. At this time, if the number of links on node k is less than m, that is, m>6, the remaining 4*(m-6)-dimensional elements of the vector will be filled with zeros. $f_{t+1}^i$ is the sample mark of performance prediction for the i-th sample sequence by node k at time (t+1). The dimension of this vector is the same as the dimension of the above predicted value vector. Then, after node k samples nk sample sequences, the performance prediction loss function and $F_k(\omega)$ obtained by the RNN algorithm model are calculated by the following formula:

$$F_k(\omega) = \sum_{i=1}^{n_k} (f_{t+1}^i - y_{t+1}^i)^2$$

Sampling method 2, random sampling: taking node k as an example, the sampling method for the same sample sequence: randomly sampling all 6 optical layer links induded in node k, and randomly selecting a certain performance prediction link as a training sample, and sequentially sampling the performance samples of the link object at each moment in the same time period. This method must ensure that the performance samples of the same sample sequence at different times in the same time period come from the same link object.

$$x_t^i = \begin{bmatrix} a'^i_t \\ b'^i_t \\ c'^i_t \\ d'^i_t \end{bmatrix} \qquad y_{t+1}^i = \begin{bmatrix} a'^i_{t+1} \\ b'^i_{t+1} \\ c'^i_{t+1} \\ d'^i_{t+1} \end{bmatrix}$$

where $x_t^i$ is the link performance vector sample for the i-th sample sequence of node k at time t. The length of this vector is the actual dimension of the performance vector of a single optical layer link, if the entire network domain is unified, which is 4 here. $y_{t+1}^i$ is the link performance prediction value for the i-th sample sequence by node k at time (t+1). The length of this vector is as described above, which is 4. $f_{t+1}^i$ is the sample mark of performance prediction for the i-th sample sequence by node k at time (t+1). $F_k(\omega)$ is the sum of performance prediction loss functions obtained by node k through the RNN algorithm model after sampling nk sample sequences.

$$F_k(\omega) = \sum_{i=1}^{n_k} (f_{t+1}^i - y_{t+1}^i)^2$$

Sampling method 3, weighted summation, convolution feature extraction processing: still taking node k as an example, the sampling method for the same sample sequence: performing the convolutional feature extraction processing on each dimension of performance parameter elements in the performance vector of 6 optical layer links contained in node k using weighted summation, and finally obtaining a single 4-dimensional optical layer link performance vector after processing, which is used as the opticallayer link performance vector of this node k. The performance samples of the six optical layer links of network element node k at each moment in the same time period are sampled in sequence, and the above convolution feature extraction processing method is used to obtain the sample sequence of "optical layer link performance vector of network element node k at each moment".

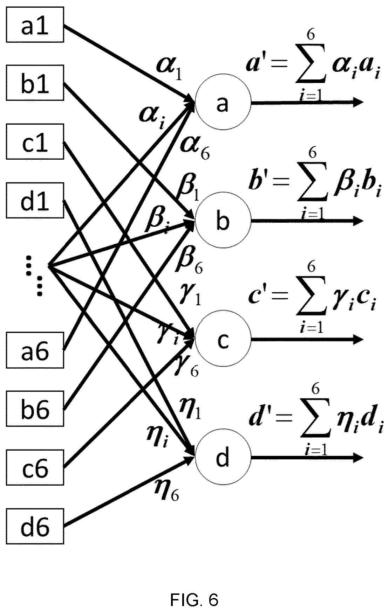

As shown in FIG. 6, each parameter in Table 1 is used for convolution feature extraction as follows:

| a1 | a2 | a3 | a4 | a5 | a6 | |
|----|----|----|----|----|----|---|
| b1 | b2 | b3 | b4 | b5 | b6 | $\begin{bmatrix} \alpha \\ \beta \\ \gamma \\ \eta \end{bmatrix}$ |
| c1 | c2 | c3 | c4 | c5 | c6 | $*$ |
| d1 | d2 | d3 | d4 | d5 | d6 | |

obtain:

$$x_t^i = \begin{bmatrix} a'^i_t \\ b'^i_t \\ c'^i_t \\ d'^i_t \end{bmatrix} \qquad y_{t+1}^i = \begin{bmatrix} a'^i_{t+1} \\ b'^i_{t+1} \\ c'^i_{t+1} \\ d'^i_{t+1} \end{bmatrix}$$

where $x_t^i$ is the convolved optical layer link performance vector sample for the i-th sample sequence by node k at time t. The length of this vector is the dimension of the performance vector of a single optical layer link, the entire network domain is unified, which is 4 here. $y_{t+1}^i$ is the optical layer link performance prediction value for the i-th sample sequence by node k at time (t+1). The length of this vector is as described above, which is 4. $f_{t+1}^i$ is the sample mark of performance prediction for the i-th sample sequence by node k at time (t+1) (the weighted sum of the performance marks of each link of node k at time (t+1)). $F_k(\omega)$ is the sum of performance prediction loss functions obtained by node k through the RNN algorithm model after sampling nk sample sequences.

$$F_k(\omega) = \sum_{i=1}^{n_k} (f_{t+1}^i - y_{t+1}^i)^2$$

In an embodiment, the optical transport network performance prediction system is applied to solution A. The specific steps include:

Step 1, each vendor's single domain trains and obtains the local OTN network performance prediction function model (i.e., single-domain digital twin model) through horizontal federated learning technology.

Step 2, each vendor's single domain builds the local DT network layer based on the local network topology model (i.e., single domain topology information), each network element node basic model, local network performance prediction and other functional models, and report according to the request of the multi-domain orchestration system.

Step 3, the multi-domain orchestration system splices the DT network layers of each domain, and then builds and generates a DT network layer model of the entire network (that is, the optical transport network digital twin model).

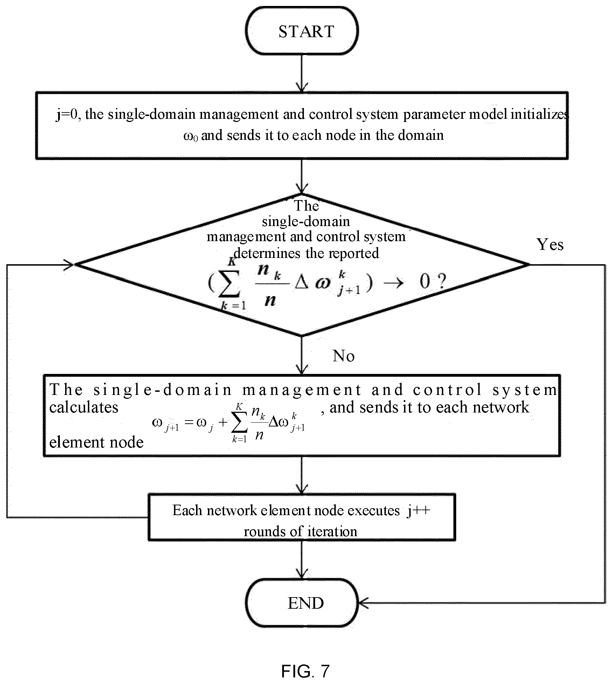

It is assumed that the single-domain management and control system of vendor A has issued the parameters $\omega_j$ of the RNN performance prediction model (i.e., single-domain performance prediction model) obtained in the jth iteration to each network element node in the local domain. On this basis, the horizontal federated learning interaction process between each network element node k and the single-domain management and control system is shown in FIG. 7.

When j=0, the single-domain management and control system parameter model initializes $\omega_0$ and sends it to each node in the domain, and then determined and reported by the single-domain management and control system.

$$(\sum_{k=1}^{K} \frac{n_k}{n} \Delta\omega_{j+1}^{k}) \rightarrow 0 ?$$

If this equation tends to 0, the single-domain management and control system ends this iteration. If this equation does not tend to 0, the single-domain management and control system calculates the formula and sends the calculation results to each network element node for execution of j++ rounds of iteration.

$$\omega_{j+1} = \omega_j + \sum_{k=1}^{K} \frac{n_k}{n} \Delta\omega_{j+1}^{k}$$

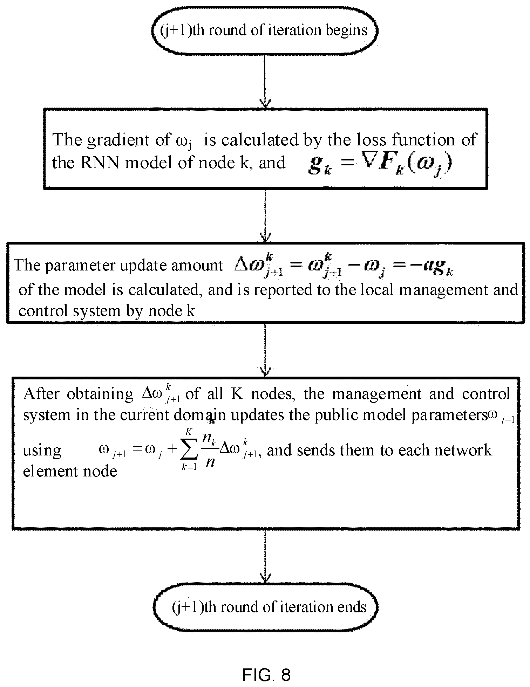

Taking (j+1) iteration process as an example, the iteration step process of each round is shown in FIG. 8, including: at the beginning of the (j+1) iteration, the gradient of $\omega_j$ is calculated by the loss function of the RNN model of node k, then the parameter update amount $\Delta\omega_{j+1}^{k} = \omega_{j+1}^{k} - \omega_j = -ag_k$ of the model is calculated and is reported to the local management and control system by node k.

After obtaining $\Delta\omega_{j+1}^{k}$ of all K nodes, the management and control system in the current domain updates the public model parameters $\omega_{j+1}$ using $\omega_{j+1} = \omega_j + \sum_{k=1}^{K} \frac{n_k}{n} \Delta\omega_{j+1}^{k}$ and sends them to each network element node, thus ending this round of iteration.

The characteristics of solution A are as follows:

1. Each network element node in the single domain has its own AI training capabilities. Through performance sampling and model training of this node, it is possible to timely sense and predict the performance changes of this network element.

2. The single-domain management and control system also has AI training capabilities. From the perspective of federated learning technology, it plays the role of an edge server in this solution. Each network element node in the single domain reports the parameter gradient (or parameter update amount) of the performance prediction model trained by its own AI algorithm to the local management and control system, and the local management and control system performs aggregation processing on the reported model parameter gradient (or parameter update amount) of all network elements, at the same time, update the parameters of the local performance prediction public model (i.e., single domain performance prediction model) constructed by the local management and control system.

3. The single-domain management and control system broadcasts and delivers the updated local performance prediction public model parameters to each network element node in the local domain.

4. Each network element node uses the public model parameters to refresh the network element performance prediction model parameters, and iteratively initiates the next round of model training and interaction with the single-domain management and control system accordingly.

5. If there is a communication failure between a certain network element node and the single-domain management and control system or the node itself fails, and thus the model parameter gradient (or parameter update amount) of this network element node cannot be uploaded, which will not affect the single-domain management and control system's update of its own public model parameters and interaction with other network element nodes.

6. This solution can solve problems such as poor generalization ability of performance prediction model training due to differences in device batches, models, and service years of each network element node in the domain, and prone to over-fitting in model prediction reasoning.

7. Each single-domain management and control system will generate the OTN DT network layer in the current domain constructed by DT model of each network element in the current domain (including the DT infrastructure model of the local network element, the DT performance prediction function model, etc.) in an OTN physical network topology connection relationship in the current domain according to the public performance prediction model in the current domain and the network topology information in the current domain obtained through final training, and send it to the multi-domain orchestration system. The multi-domain orchestration system splices the OTN DT network layers reported by each single domain to obtain the OTN DT network layer of the entire network. Since the OTN DT network layer of the entire network is obtained by splicing, the performance prediction models among the single-domain parts included are different.

8. If the single-domain management and control system and each network element within the domain are networked and constructed by the same device vendor, the network element does not need to encrypt the parameter gradient of the performance prediction model of the network element before reporting the parameter gradient (or parameter update amount) of the network element model.

9. when using horizontal federated learning to train the public performance prediction model, it is necessary to ensure that the RNN training model of each network element node distributed in the single domain (here, RNN is used as an example) and the RNN training model of the single-domain management and control system that plays the role of an edge server in the training have the same structure: including all vector element attributes input by the RNN model, the number of vector elements, the number of layers of the RNN model, the number of neurons in each layer, the activation function and connection relationship between layers, and the output vector attributes, the number of output vector elements, etc., to ensure unified training and synchronous refresh of RNN model parameters.

The technical effect that this solution can bring is to solve the problem that the device batches, models, service years and other attributes of each network element are different, resulting in poor generalization ability of DT performance prediction model training and prone to over-simulation during the inference process, thereby realizing strong generalization ability and high prediction accuracy of the OTN DT performance prediction model.

In an embodiment, the optical transport network performance prediction system is applied to solution B. The specific steps include:

Step 1, multi-domain orchestration and each single domain are trained through horizontal federated learning technology to obtain a multi-domain OTN network performance prediction function model (i.e., network performance prediction model).

Step 2, the multi-domain orchestration system generates the entire network OTN DT network layer model (i.e., optical transport network digital twin model) according to the multi-domain OTN network performance prediction public function model and the encrypted topology information reported by each single domain.

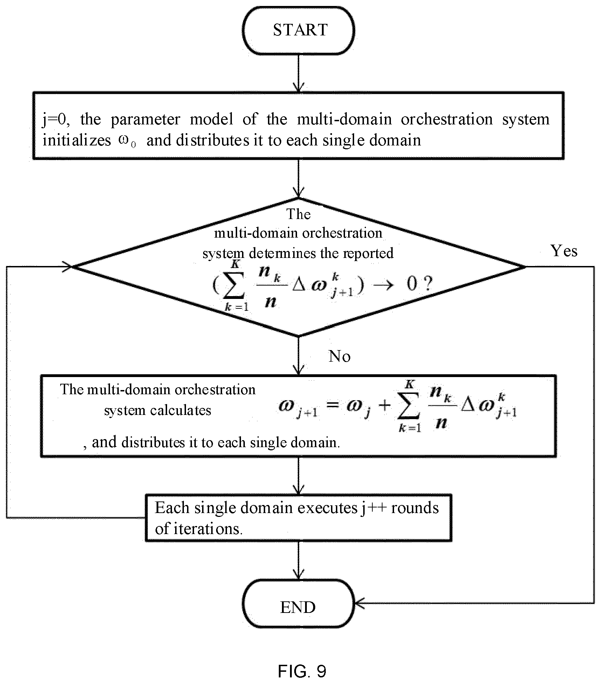

Taking the (j+1) rounds of iteration process as an example, the iteration step process of each round is shown in FIG. 9, including:

when j=0, the parameter model of the multi-domain orchestration system initializes $\omega_0$ and distributes it to each single domain. The multi-domain orchestration system determines $(\sum_{k=1}^{K} \frac{n_k}{n} \Delta\omega_{j+1}^{k}) \to 0$ ? reported by the single-domain management server. If this formula tends to 0, the multi-domain management and control system ends this iteration. If this formula does not tend to 0, the multi-domain orchestration system calculates $\omega_{j+1} = \omega_j + \sum_{k=1}^{K} \frac{n_k}{n} \Delta\omega_{j+1}^{k}$ and issues it to each single domain, and each single domain executes j++ rounds of iterations.

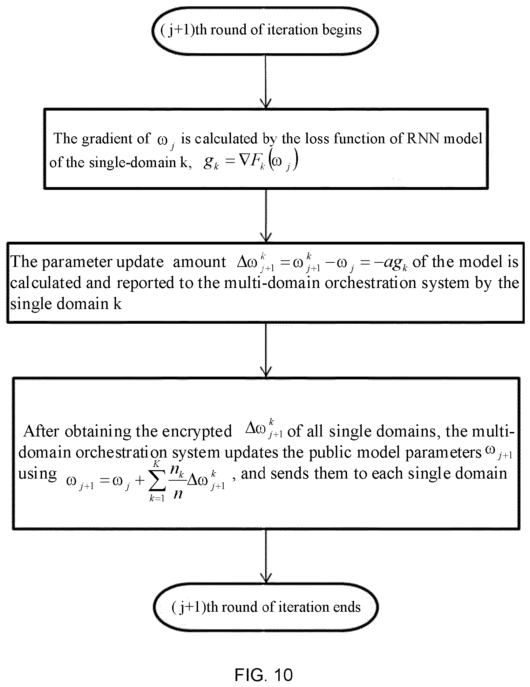

Taking the j+1 iteration process as an example, the iteration step process of each round is shown in FIG. 10, including:

at the beginning of the j+1 rounds of iteration, the gradient of $\omega_j$ is calculated by the loss function of RNN model of the single-domain k, $g_k = \nabla F_k(\omega_j)$, and then the parameter update amount $\Delta\omega_{j+1}^{k} = \omega_{j+1}^{k} - \omega_j = -ag_k$ of the model is calculated and reported to the multi-domain orchestration system by the single domain k. After obtaining the encrypted $\Delta\boldsymbol{\omega}_{j+1}^{k}$ of all single domains, the multi-domain orchestration system updates the public model parameters $\omega_{j+1}$ using $\boldsymbol{\omega}_{j+1} = \boldsymbol{\omega}_j + \sum_{k=1}^{K} \frac{n_k}{n} \Delta\boldsymbol{\omega}_{j+1}^{k}$ and sends them to each single domain, thus ending this round of iteration.

In solution B, the network performance prediction model is updated according to the following formula:

$$\boldsymbol{\omega}_{j+1} = \boldsymbol{\omega}_j + \sum_{k=1}^{K} \frac{n_k}{n} \Delta\boldsymbol{\omega}_{j+1}^{k}$$

Assume that the entire optical transport network has K single domains, and the performance data sampling sequence set of each single-domain management server for its respective single domain is $P_k$ and $\left( x_{(0\ldots t)}^{i}, y_{t+1}^{i} \right), i \in P_k$. $y_{t+1}^{i}$ is the performance data prediction vector for i-th sample sequence by single domain k at time (t+1). $x_t^{i}$ is the performance data vector of the i-th sample sequence at time t. The sample sequence refers to the sample set sampled in time series from time 0 to time t for the same prediction object. The sampling period of a sample sequence is $[0\ldots t, t+1]$, the number of sample sequences is $n_k = |P_k|$, then the total number of the sample sequences of the single domain is $n = \sum_{k=1}^{K} n_k$.

The characteristics of solution B are as follows:

1. Each network element node in the single domain does not have AI training and modeling capabilities. Each single-domain management and control system has AI training and modeling capabilities. Multi-domain orchestration systems across vendors also have AI training and modeling capabilities.

2. From the perspective of federated learning technology, the multi-domain orchestration system plays the role of edge server in this solution. Each single-domain management and control system reports the parameter gradient (or parameter update amount) of the performance prediction model trained by its own AI algorithm to the multi-domain orchestration system through homomorphic encryption technology, and the multi-domain orchestration system performs homomorphic encryption and aggregation processing on the reported model parameter gradient (or parameter update amount) of all single-domain management and control systems, and at the same time updates the multi-domain performance prediction public model parameters constructed by the multi-domain orchestration system.

3. The multi-domain orchestration system broadcasts the updated multi-domain performance prediction public model parameters to each single-domain management and control system.

4. Each single-domain management and control system uses public model parameters to refresh the performance prediction model parameters of the domain, and iteratively initiates the next round of model training and interaction with the multi-domain orchestration system accordingly.

5. If there is a communication failure between a certain single-domain control system and the multi-domain orchestration system or the node itself fails, and thus the model parameter gradient (or parameter update amount) of the local control system cannot be uploaded, which will not affect the multi-domain management and control system's update of its own public model parameters and interaction with other single-domain management and control systems.

6. This solution can solve problems such as poor generalization ability of performance prediction model training due to differences in device batches, models, and service years of each network element node between domains, and prone to over-fitting during model prediction inference. The performance prediction model is universal across domains and has stronger generalization capabilities.

7. The multi-domain orchestration system will generate the cross-domain OTN DT network layer for the entire network based on the multi-domain public performance prediction model obtained through final training and the encrypted network topology information reported by each domain. The performance prediction models of each OTN domain are the same.

8. Each domain is networked and constructed by different device vendors. Therefore, the management and control system of each domain needs to perform encryption processing on the performance prediction model parameter gradient (or parameter update amount) of this domain before reporting the domain model parameter gradient (or parameter update amount). At the same time, the network topology information in the current domain reported by each domain to the multi-domain management and control system is also encrypted as necessary.

9. When using horizontal federated learning to train public performance prediction models, it is necessary to ensure that the RNN training model of each single-domain management and control system (here, RNN is used as an example) and the RNN training model of the multi-domain orchestration system that plays the role of an edge server in training have the same structure: including all vector element attributes input by the RNN model, the number of vector elements, the number of layers of the RNN model, the number of neurons in each layer, the activation function and connection relationship between layers, and the output vector attributes, the number of output vector elements, etc., to ensure unified training and synchronous refresh of RNN model parameters.

The technical effect that this solution can bring is to solve the problem that the device batches, models, service years and other attributes of network elements of each vendor are different, resulting in poor generalization ability of cross-domain OTN DT performance prediction model training and prone to over-simulation during the inference process, thereby realizing strong generalization ability and high prediction accuracy of the OTN DT performance prediction model.

The steps of the various methods above are divided just for the purpose of clear description. During implementation, they can be combined into one step or some steps can be split into multiple steps. As long as they include the same logical relationship, they are all within the scope of the present application. Adding insignificant modifications or introducing insignificant designs to the algorithm or process without changing the core design of the algorithm and process are within the scope of the present application.

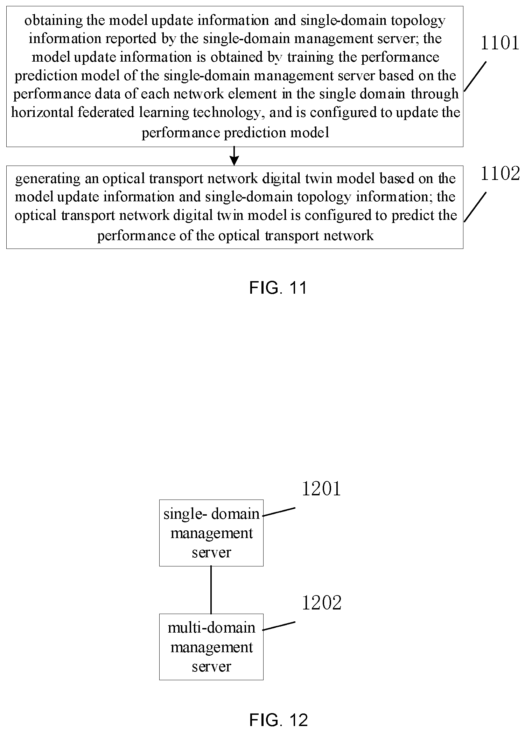

Embodiments of the present application also relate to a method for predicting performance of an optical transmission network, applied to a multi-domain management server, as shown in FIG. 11, including:

Step 1101, obtaining the model update information and single-domain topology information reported by the single-domain management server; the model update information is obtained by training the performance prediction model of the single-domain management server based on the performance data of each network element in the single domain through horizontal federated learning technology, and is configured to update the performance prediction model; and

Step 1102, generating an optical transport network digital twin model based on the model update information and single-domain topology information; the optical transport network digital twin model is configured to predict the performance of the optical transport network.

The method for predicting performance of the optical transmission network of this embodiment is applied to the multi-domain management server. The multi-domain management server is a server that manages all single-domain management servers in the optical transport network. The multi-domain orchestration system can be run on the multi-domain management server to achieve the method for predicting performance of the optical transmission network.

In an embodiment, the performance prediction model is a single-domain performance prediction model, and the model update information is a single-domain digital twin model obtained based on the updated single-domain performance prediction model. The multi-domain management server generates the optical transport network digital twin model based on model update information and single-domain topology information in the following manner. According to the single-domain topology information, the single-domain digital twin model reported by the single-domain management server of each single domain is spliced to obtain the optical transport network digital twin model.

In another embodiment, the performance prediction model is a network performance prediction model, and the model update information is the parameter update amount of the network performance prediction model. The multi-domain management server generates the optical transport network digital twin model based on the model update information and single-domain topology information in the following manner: updating the network performance prediction model according to the parameter update amount of the network performance prediction model; generating the optical transport network digital twin model according to the updated network performance prediction model and single-domain topology information.

Specifically, the multi-domain management server updates the network performance prediction model according to the parameter update amount of the network performance prediction model, which can be to update the parameters of the single-domain performance prediction model according to the parameter update amount reported by each network element. Specifically, it is implemented according to the following formula:

$$\boldsymbol{\omega}_{j+1} = \boldsymbol{\omega}_j + \sum_{k=1}^{K} \frac{\boldsymbol{n}_k}{\boldsymbol{n}} \Delta \boldsymbol{\omega}_{j+1}^{k}$$

Assuming that there are a total of K devices updating the performance prediction model in a horizontal federated learning manner, the performance data sampling sequence set of each device is $\boldsymbol{P}_k$ and $\left( \boldsymbol{x}_{(0\ldots t)}^{i}, \boldsymbol{y}_{t+1}^{i} \right)$, $i \in \boldsymbol{P}_k$. $\boldsymbol{y}_{t+1}^{i}$ is the performance data prediction vector for the i-th sample sequence by device k at time (t+1). $\boldsymbol{x}_{t}^{i}$ is the performance data vector of the i-th sample sequence at time t. The sample sequence refers to a sample set sampled in time series from time 0 to time t for the same prediction object. The sampling period of a sample sequence is $[0\ldots\boldsymbol{t}, \boldsymbol{t} + 1]$. The number of sample sequences is $\boldsymbol{n}_k = |\boldsymbol{P}_k|$, then the total number of sample sequences in the single domain is $\boldsymbol{n} = \sum_{k=1}^{K} \boldsymbol{n}_k$. $\omega_j$ and $\omega_{j+1}$ are the parameter values obtained by the performance prediction model after the j-th round of iterations and the j+1-th round of iterations, respectively. $\omega_{j+1}^{k}$ is the parameter value of the performance prediction model obtained by the j+1 iteration of the device k during the horizontal federated learning process. $\Delta \boldsymbol{\omega}_{j+1}^{k} = \boldsymbol{\omega}_{j+1}^{k} - \boldsymbol{\omega}_j = -a\boldsymbol{g}_k$ is the parameter update amount which the parameters $\omega_j$ of the performance prediction model calculated by the device k are updated to $\omega_{j+1}$, $\boldsymbol{a}$ is the learning rate of the performance prediction model, and $g_k$ is the gradient of $\omega_j$.

It is not difficult to find that this embodiment is an embodiment corresponding to the above-mentioned embodiment, and this embodiment can be implemented in cooperation with the above-mentioned embodiment. The relevant technical details mentioned in the above embodiment are still valid in this embodiment. In order to reduce duplication, they will not be described again here. Correspondingly, the relevant technical details mentioned in this embodiment can also be applied to the above embodiments.

Embodiments of the present application also relate to a system for predicting performance of an optical transmission network, as shown in FIG. 12, including a single-domain management server 1201 and a multi-domain management server 1202. The single-domain management server 1201 is communicated with the multi-domain management server 1202.

The single-domain management server 1201 is configured to obtain the performance prediction model; that is, obtain the model update information of the performance prediction model through horizontal federated learning technology; and report the model update information and single domain topology information to the multi-domain management server 1202 for the multi-domain management server 1202 to generate the optical transmission network digital twin model. The model update information is obtained after training the performance prediction model based on the performance data of each network element in the single domain.

The multi-domain management server 1202 is configured to obtain the model update information and single-domain topology information reported by the single-domain management server 1201, the model update information is obtained by training the performance prediction model of the single-domain management server 1201 based on the performance data of each network element in the single domain through horizontal federated learning technology; and generate the optical transport network digital twin model according to the model update information and the single-domain topology information, the optical transport network digital twin model is configured to predict the performance of the optical transport network.

It is not difficult to find that this embodiment is a system embodiment corresponding to the above-mentioned embodiment, and this embodiment can be implemented in cooperation with the above-mentioned embodiment. The relevant technical details mentioned in the above embodiment are still valid in this embodiment. In order to reduce duplication, they will not be described again here. Correspondingly, the relevant technical details mentioned in this embodiment can also be applied to the above embodiments.

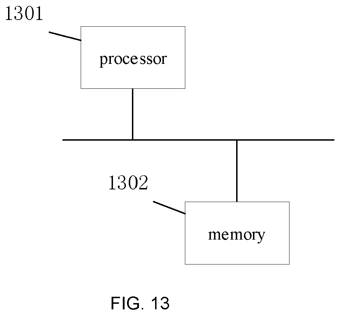

Embodiments of the present application also relate to an electronic device, as shown in FIG. 13, including: at least one processor 1301; and a memory 1302 communicated with the at least one processor. An instruction executable by the at least one processor 1301 is stored in the memory 1302. The instruction is executed by the at least one processor 1301 to perform the method in any of the above embodiments.

The memory 1302 and the processor 1301 are connected using a bus. The bus can include any number of interconnected buses and bridges. The bus connects various circuits of one or more processors 1301 and the memory 1302 together. The bus can also connect various other circuits together such as peripherals, voltage regulators, and power management circuits, which are all well known in the art and therefore will not be described further herein. The bus interface provides the interface between the bus and the transceiver. The transceiver can be one element or multiple elements, such as multiple receivers and transmitters, providing a unit for communicating with various other devices over a transmission medium. The information processed by the processor 1301 is transmitted on the wireless medium through the antenna. Further, the antenna also receives the information and transmits the information to the processor 1301.

The processor 1301 is responsible for managing the bus and general processing, and can also provide various functions, including timing, peripheral interfaces, voltage regulation, power management, and other control functions. The memory 1302 can be used to store information used by the processor when performing operations.

Embodiments of the present application relate to a computer-readable storage medium on which a computer program is stored. The above method embodiments are implemented when the computer program is executed by the processor.

That is, those skilled in the art can understand that all or part of the steps in the methods of the above embodiments can be completed by instructing relevant hardware through a program. The program is stored in a storage medium and includes several instructions to cause a device (which may be a microcontroller, a chip, etc.) or a processor to execute all or part of the steps of the methods in various embodiments of the present application. The aforementioned storage media include: U disk, mobile hard disk, read-only memory (ROM), random access memory (RAM), magnetic disk or optical disk and other media that can store program code.

**Claims**

1. A method for predicting performance of an optical transmission network, applied to a single-domain management server, **characterized by** comprising:

   (101), obtaining a performance prediction model;
   (102), obtaining model update information of the performance prediction model through horizontal federated learning technology, wherein the model update information is obtained by training the performance prediction model based on performance data of each network element in a single domain, and is configured to update the performance prediction model; and
   (103), reporting the model update information and single-domain topology information to a multi-domain management server, so that the multi-domain management server generates an optical transport network digital twin model based on the model update information and the single-domain topology information, wherein the optical transport network digital twin model is configured to predict performance of the optical transmission network.

2. The method for predicting performance of the optical transmission network according to claim 1, wherein the performance prediction model comprises a single domain performance prediction model;

   the obtaining the model update information comprises: obtaining a single-domain digital twin model based on an updated single-domain performance prediction model;
   obtaining the model update information of the performance prediction model comprises:

   delivering the single-domain performance prediction model to each network element in the single domain;
   obtaining a parameter update amount of the single-domain performance prediction model reported by each network element; wherein each network element is configured to separately train the single-domain performance prediction model according to local performance data, and calculate the parameter update amount;
   updating a parameter of the single-domain performance prediction model according to the parameter update amount reported by each network element to obtain the updated single-domain performance prediction model; and
   obtaining the single-domain digital twin model according to the updated single-domain performance prediction model and the single-domain topology information.

3. The method for predicting performance of the optical transmission network according to claim 2, wherein updating the parameter of the single-domain performance prediction model according to the parameter update amount reported by each network element to obtain the updated single-domain performance prediction model comprises:

   iteratively updating the single-domain performance prediction model;
   wherein the iterative updating comprises: delivering the updated single-domain performance prediction model to each network element in the single domain, obtaining a parameter update amount reported again by each network element, updating the single-domain performance prediction model according to a re-reported parameter update amount, and initiating a next round of iterative update until a condition for stopping iteration is met.

4. The method for predicting performance of the optical transmission network according to claim 1, wherein the performance prediction model comprises: a network performance prediction model;

the model update information comprises: the parameter update amount of the network performance prediction model;
obtaining the model update information of the performance prediction model comprises:

training the network performance prediction model according to the performance data of each network element to obtain the parameter update amount of the network performance prediction model;
wherein the parameter update amount of the network performance prediction model is configured to report to the multi-domain management server, so that the multi-domain management server updates the network performance prediction model according to the parameter update amount of the network performance prediction model.

5. The method for predicting performance of the optical transmission network according to any one of claims 1 to 4, wherein updating the performance prediction model is implemented according to the following formula:

$$\boldsymbol{\omega}_{j+1} = \boldsymbol{\omega}_j + \sum_{k=1}^{K} \frac{\boldsymbol{n}_k}{\boldsymbol{n}} \Delta \boldsymbol{\omega}_{j+1}^{k}$$

where assuming that there are a total of K devices updating the performance prediction model in a horizontal federated learning manner, a performance data sampling sequence set of each device is $\boldsymbol{P}_k$ and has $\left( \boldsymbol{x}_{(0\ldots t)}^{i}, \boldsymbol{y}_{t+1}^{i} \right)$, $i \in \boldsymbol{P}_k$, $\boldsymbol{y}_{t+1}^{i}$ is a performance data prediction vector for i-th sample sequence by a device k at time (t+1), $\boldsymbol{x}_{t}^{i}$ is a performance data vector for the i-th sample sequence at time t, a sample sequence refers to a set of samples sampled in time series from time 0 to time t for a same prediction object, a sampling period of the sample sequence is $[0\ldots t, t+1]$, a number of the sample sequences is $\boldsymbol{n}_k = |\boldsymbol{P}_k|$, a total number of sample sequences in a single domain is $\boldsymbol{n} = \sum_{k=1}^{K} \boldsymbol{n}_k$, $\omega_j$ and $\omega_{j+1}$ are parameter values obtained by the performance prediction model after j-th round of iterations and (j+1)-th round of iterations, respectively,

$$\Delta \boldsymbol{\omega}_{j+1}^{k} = \boldsymbol{\omega}_{j+1}^{k} - \boldsymbol{\omega}_j = -a\boldsymbol{g}_k$$

is the parameter update amount by which a parameter $\omega_j$ of the performance prediction model calculated by the device k is updated to $\omega_{j+1}$, $\boldsymbol{a}$ is a learning rate of the performance prediction model, and $g_k$ is gradient of $\omega_j$.

6. The method for predicting performance of the optical transmission network according to claim 5, wherein updating the performance prediction model is implemented based on $\boldsymbol{y}_{t+1}^{i}$ and a loss function of an actual performance data vector $\boldsymbol{f}_{t+1}^{i}$ and $\boldsymbol{F}_k(\omega)$ at time (t+1), wherein,

$$F_k(\boldsymbol{\omega}) = \sum_{i=1}^{n_k} (\boldsymbol{f}_{t+1}^{i} - \boldsymbol{y}_{t+1}^{i})^2$$

the performance data vector $\boldsymbol{x}_t^i$ is sampled from four dimensions of input optical power $a_i$, output optical power $b_i$, receiving end optical attenuation $c_i$, and receiving end optical signal-to-noise ratio $d_i$, the performance data vector is sampled by any of the following three methods:

a first method is to sequentially sample performance values of each optical layer link in a same sampling period from the four dimensions, and perform a weighted summation convolution feature extraction processing on the performance values of each dimension;
$\boldsymbol{x}_t^i$ and $\boldsymbol{y}_{t+1}^{i}$ obtained by the convolution feature extraction processing are as follows:

$$x_t^i = \begin{bmatrix} a'^i_t \\ b'^i_t \\ c'^i_t \\ d'^i_t \end{bmatrix} \qquad y_{t+1}^i = \begin{bmatrix} a'^i_{t+1} \\ b'^i_{t+1} \\ c'^i_{t+1} \\ d'^i_{t+1} \end{bmatrix}$$

where $a' = \sum_{i=1}^{m} \alpha_i a_i$, $b' = \sum_{i=1}^{m} \beta_i b_i$, $c' = \sum_{i=1}^{m} \gamma_i c_i$, $d' = \sum_{i=1}^{m} \eta_i d_i$, $\alpha_i$, $\beta_i$, $\gamma_i$ and $\eta_i$ are preset parameters in the convolution feature extraction processing operation, and m is a number of optical layer links in the device k;

a second method is to concatenate performance values of the four dimensions of each optical layer link at time t into a long vector, and $x_t^i$ and $y_{t+1}^i$ are as follows:

$$x_t^i = \begin{bmatrix} a^i_{1t} \\ b^i_{1t} \\ c^i_{1t} \\ d^i_{1t} \\ \dots \\ a^i_{mt} \\ b^i_{mt} \\ c^i_{mt} \\ d^i_{mt} \end{bmatrix} \qquad y_{t+1}^i = \begin{bmatrix} a^i_{1t+1} \\ b^i_{1t+1} \\ c^i_{1t+1} \\ d^i_{1t+1} \\ \dots \\ a^i_{mt+1} \\ b^i_{mt+1} \\ c^i_{mt+1} \\ d^i_{mt+1} \end{bmatrix}$$

m is the number of optical layer links in the device k, and $a^i_{1t}$ is ai value of m=1, that is, a first optical layer link at time t, and the same applies to $b^i_{1t}$, $c^i_{1t}$, $d^i_{1t}$, $a^i_{mt}$ ... $d^i_{mt}$ ; and

a third method is to randomly sample performance values of the four dimensions of each optical layer link, wherein the performance values of a same sample sequence at different times in a same time period come from a same optical layer link.

7. A method for predicting performance of an optical transmission network, applied to a multi-domain management server, **characterized by** comprising:

(1101), obtaining model update information and single-domain topology information reported by a single-domain management server, wherein the model update information is obtained by training performance prediction model of the single-domain management server based on performance data of each network element in a single domain through horizontal federated learning technology and is configured to update the performance prediction model; and
(1102), generating an optical transport network digital twin model based on the model update information and the single-domain topology information, wherein the optical transport network digital twin model is configured to predict performance of an optical transport network.

8. The method for predicting performance of the optical transmission network according to claim 7, wherein the performance prediction model comprises a single domain performance prediction model;

the obtaining the model update information comprises: obtaining a single-domain digital twin model based on an updated single-domain performance prediction model;
generating the optical transport network digital twin model based on the model update information and the single-domain topology information comprises:
splicing the single-domain digital twin model reported by the single-domain management server of each single domain according to the single-domain topology information to obtain the optical transport network digital twin model.

9. The method for predicting performance of the optical transmission network according to claim 7, wherein the performance prediction model comprises a network performance prediction model;

the model update information comprises: a parameter update amount of the network performance prediction model;

generating the optical transport network digital twin model based on the model update information and the single-domain topology information comprises:

updating the network performance prediction model according to the parameter update amount of the network performance prediction model; and

generating the optical transport network digital twin model according to an updated network performance prediction model and the single-domain topology information.

10. A system for predicting performance of an optical transmission network, **characterized by** comprising:

a single-domain management server (1201) and a multi-domain management server (1202);
wherein the single-domain management server (1201) is communicated with the multi-domain management server (1202);
the single-domain management server (1201) is configured to obtain a performance prediction model, obtain model update information of the performance prediction model through horizontal federated learning technology, wherein the model update information is obtained by training the performance prediction model based on performance data of each network element in a single domain; report the model update information and single-domain topology information to the multi-domain management server (1202), so that the multi-domain management server (1202) generates an optical transport network digital twin model; and
the multi-domain management server (1202) is configured to obtain the model update information and the single-domain topology information reported by the single-domain management server (1201); wherein the model update information is obtained by training performance prediction model of the single-domain management server (1201) based on performance data of each network element in a single domain through the horizontal federated learning technology; generate the optical transport network digital twin model according to the model update information and the single-domain topology information; wherein the optical transport network digital twin model is configured to predict performance of an optical transport network.

11. An electronic device, **characterized by** comprising:

at least one processor (1301); and
a memory (1302) communicated with the at least one processor (1301);
wherein an instruction executable by the at least one processor (1301) is stored in the memory (1302), and the instruction is executed by the at least one processor (1301) to enable the at least one processor (1301) to perform the method for predicting performance of the optical transmission network according to any one of claims 1 to 6, or perform the method for predicting performance of the optical transmission network according to any one of claims 7 to 9.

12. A computer-readable storage medium, **characterized in that** a computer program is stored in the computer-readable storage medium, when the computer program is executed by a processor, the method for predicting performance of the optical transmission network according to any one of claims 1 to 6, or the method for predicting performance of the optical transmission network according to any one of claims 7 to 9 is implemented.

**Patentansprüche**

1. Ein Verfahren zur Vorhersage der Leistung eines optischen Übertragungsnetzes, angewendet auf einen Single-Domain-Management-Server, **gekennzeichnet durch** Folgendes:

(101) das Erhalten eines Leistungs-Vorhersagemodells;
(102) das Erhalten von Modellaktualisierungsinformationen des Leistungs-Vorhersagemodells mittels horizontaler föderierter Lerntechnologie, wobei die Modellaktualisierungsinformationen durch Training des Leistungs-Vorhersagemodells auf Basis der Leistungsdaten jedes Netzwerkelements in einer einzelnen Domäne gewonnen werden und dazu konfiguriert sind, das Leistungs-Vorhersagemodell zu aktualisieren; und
(103) das Melden der Modellaktualisierungsinformationen und der Single-Domain-Topologieinformationen an einen Multi-Domain-Management-Server, sodass der Multi-Domain-Management-Server ein Digital-Twin-Modell des optischen Transportnetzes basierend auf den Modellaktualisierungsinformationen und den Single-Domain-Topologieinformationen erzeugt, wobei das Digital-Twin-Modell des optischen Transportnetzes dazu konfiguriert ist, die Leistung des optischen Übertragungsnetzes vorherzusagen.

2. Das Verfahren zur Vorhersage der Leistung des optischen Übertragungsnetzes gemäß Anspruch 1, wobei das Leistungs-Vorhersagemodell ein Single-Domain-Leistungs-Vorhersagemodell umfasst;

das Erhalten der Modellaktualisierungsinformationen umfasst: das Erhalten eines Single-Domain-Digital-Twin-Modells basierend auf einem aktualisierten Single-Domain-Leistungs-Vorhersagemodell;
das Erhalten der Modellaktualisierungsinformationen des Leistungs-Vorhersagemodells umfasst:

• das Übermitteln des Single-Domain-Leistungs-Vorhersagemodells an jedes Netzwerkelement in der einzelnen Domäne;
• das Erhalten einer von jedem Netzwerkelement gemeldeten Parameteraktualisierungsmagnitude des Single-Domain-Leistungs-Vorhersagemodells, wobei jedes Netzwerkelement so konfiguriert ist, dass es das Single-Domain-Leistungs-Vorhersagemodell separat anhand lokaler Leistungsdaten trainiert und die Parameteraktualisierungsmagnitude berechnet;
• das Aktualisieren eines Parameters des Single-Domain-Leistungs-Vorhersagemodells gemäß der von jedem Netzwerkelement gemeldeten Parameteraktualisierungsmagnitude, um das aktualisierte Single-Domain-Leistungs-Vorhersagemodell zu erhalten; und
• das Erhalten des Single-Domain-Digital-Twin-Modells gemäß dem aktualisierten Single-Domain-Leistungs-Vorhersagemodell und den Single-Domain-Topologieinformationen.

3. Das Verfahren zur Vorhersage der Leistung des optischen Übertragungsnetzes gemäß Anspruch 2, wobei die Aktualisierung der Parameter des Single-Domain-Leistungs-Vorhersagemodells gemäß der von jedem Netzwerkelement gemeldeten Parameteraktualisierungsmagnitude zur Erzeugung des aktualisierten Single-Domain-Leistungs-Vorhersagemodells Folgendes umfasst:
das iterative Aktualisieren des Single-Domain-Leistungs-Vorhersagemodells; wobei das iterative Aktualisieren Folgendes umfasst:

das Übermitteln des aktualisierten Single-Domain-Leistungs-Vorhersagemodells an jedes Netzwerkelement in der einzelnen Domäne,
das erneute Erhalten einer von jedem Netzwerkelement gemeldeten Parameteraktualisierungsmagnitude,
das Aktualisieren des Single-Domain-Leistungs-Vorhersagemodells gemäß der erneut gemeldeten Parameteraktualisierungsmagnitude, und
das Einleiten einer nächsten Runde der iterativen Aktualisierung, bis eine Bedingung zum Stoppen der Iteration erfüllt ist.

4. Das Verfahren zur Vorhersage der Leistung des optischen Übertragungsnetzes gemäß Anspruch 1, wobei das Leistungs-Vorhersagemodell Folgendes umfasst: ein Netzwerkleistungs-Vorhersagemodell; die Modellaktualisierungsinformationen umfassen: die Parameteraktualisierungsmagnitude des Netzwerkleistungs-Vorhersagemodells; das Erhalten der Modellaktualisierungsinformationen des Leistungs-Vorhersagemodells umfasst:

das Trainieren des Netzwerkleistungs-Vorhersagemodells anhand der Leistungsdaten jedes Netzwerkelements, um die Parameteraktualisierungsmagnitude des Netzwerkleistungs-Vorhersagemodells zu erhalten;
wobei die Parameteraktualisierungsmagnitude des Netzwerkleistungs-Vorhersagemodells dazu konfiguriert ist, an den Multi-Domain-Management-Server gemeldet zu werden,
sodass der Multi-Domain-Management-Server das Netzwerkleistungs-Vorhersagemodell gemäß der Parameteraktualisierungsmagnitude des Netzwerkleistungs-Vorhersagemodells aktualisiert.

5. Das Verfahren zur Vorhersage der Leistung des optischen Übertragungsnetzes nach einem der Ansprüche 1 bis 4, wobei die Aktualisierung des Leistungs-Vorhersagemodells gemäß der folgenden Formel durchgeführt wird:

$$\omega_{j+1} = \omega_j + \sum_{k=1}^{K} \frac{n_k}{n} \Delta \omega_{j+1}^k$$

wobei angenommen wird, dass es insgesamt K Geräte gibt, die das Leistungs-Vorhersagemodell in einer horizontalen föderierten Lernweise aktualisieren, und eine Leistungsdaten-Abtastsequenzmenge jedes Geräts ist $\boldsymbol{P}_k$ und hat

$$\left( \boldsymbol{x}^{i}_{(0\ldots t)}, \boldsymbol{y}^{i}_{t+1} \right), i \in \boldsymbol{P}_k,\ \boldsymbol{y}^{i}_{t+1}$$ ist ein Leistungsdaten-Vorhersagevektor für die i-te Stichprobensequenz eines Geräts k zum Zeitpunkt (t+1), $x^i_t$ ist ein Leistungsdatenvektor für die i-te Stichprobensequenz zum Zeitpunkt t, wobei sich eine Stichprobensequenz auf eine Menge von Stichproben bezieht, die zeitlich von Zeitpunkt 0 bis Zeitpunkt t für dasselbe Vorhersageobjekt als Zeitreihe erfasst wurden, und eine Abtastperiode der Stichprobensequenz ist [0...$t,t$ +1] eine Anzahl der Stichprobenfolgen $n_k = |\boldsymbol{P}_k|$, die Gesamtzahl der Stichprobenfolgen in einem einzelnen Bereich

beträgt $n = \sum\limits_{k=1}^{K} n_k$, $\omega_j$ und $\omega_{j+1}$ die Parameterwerte, die vom Leistungs-Vorhersagemodell nach der j-ten Iterationsrunde bzw. der (j+1)-ten Iterationsrunde erhalten werden, $\Delta\omega^{k}_{j+1} = \omega^{k}_{j+1} - \omega_j = -ag_k$ ist die Parameteraktualisierung, um die ein Parameter $\omega_j$ des vom Gerät k berechneten Leistungs-Vorhersagemodells wird auf $\omega_{j+1}$ aktualisiert, $\boldsymbol{a}$ ist die Lernrate des Leistungs-Vorhersagemodells, und $g_k$ ist der Gradient von $\omega_j$.

6. Das Verfahren zur Vorhersage der Leistung des optischen Übertragungsnetzes nach Anspruch 5, wobei die Aktualisierung des Leistungs-Vorhersagemodells auf der Grundlage von $y^i_{t+1}$ durchgeführt wird und eine Verlustfunktion eines Vektors tatsächlicher Leistungsdaten $f^i_{t+1}$ und $F_k(\omega)$ zur Zeit (t+1), wobei

$F_k(\omega) = \sum\limits_{i=1}^{n_k} (f^i_{t+1} - y^i_{t+1})^2$ der Leistungsdatenvektor $x^i_t$ wird aus vier Dimensionen der eingehenden optischen Leistung $a_i$ abgetastet, ausgehende optische Leistung $b_i$ optische Dämpfung am Empfangsende $c_i$ und optisches Signal-Rausch-Verhältnis am Empfangsende $d_i$, der Leistungsdatenvektor wird nach einer der folgenden drei Methoden abgetastet: Eine erste Methode besteht darin, die Leistungswerte jeder optischen Schichtverbindung in derselben Abtastperiode nacheinander aus den vier Dimensionen zu erfassen und eine gewichtete Summenkonvolutions-Feature-Extraktionsverarbeitung auf den Leistungswerten jeder Dimension durchzuführen. $x^i_t$ und $y^i_{t+1}$ die durch die Konvolutions-Feature-Extraktionsverarbeitung erhaltenen Werte sind wie folgt:

$$x^i_t = \begin{bmatrix} a''^i_t \\ b''^i_t \\ c''^i_t \\ d''^i_t \end{bmatrix} \qquad y^i_{t+1} = \begin{bmatrix} a''^i_{t+1} \\ b''^i_{t+1} \\ c''^i_{t+1} \\ d''^i_{t+1} \end{bmatrix}$$

wobei $a' = \sum\limits_{i=1}^{m} \alpha_i a_i$, $b' = \sum\limits_{i=1}^{m} \beta_i b_i$, $c' = \sum\limits_{i=1}^{m} \gamma_i c_i$, $d' = \sum\limits_{i=1}^{m} \eta_i d_i$, $\alpha_i,\ \beta_i,\ \gamma_i$ und $\eta_i$ sind voreingestellte Parameter im Konvolutions-Feature-Extraktionsprozess, und m ist die Anzahl der optischen Schichtverbindungen im Gerät k:
eine zweite Methode besteht darin, die Leistungswerte der vier Dimensionen jeder optischen Schichtverbindung zur Zeit t zu einem langen Vektor zusammenzuführen, und $x^i_t$ und $y^i_{t+1}$ sind wie folgt

$$x^i_t = \begin{bmatrix} a^i_{1t} \\ b^i_{1t} \\ c^i_{1t} \\ d^i_{1t} \\ \cdots \\ a^i_{mt} \\ b^i_{mt} \\ c^i_{mt} \\ d^i_{mt} \end{bmatrix} \qquad y^i_{t+1} = \begin{bmatrix} a^i_{1t+1} \\ b^i_{1t+1} \\ c^i_{1t+1} \\ d^i_{1t+1} \\ \cdots \\ a^i_{mt+1} \\ b^i_{mt+1} \\ c^i_{mt+1} \\ d^i_{mt+1} \end{bmatrix}$$

m ist die Anzahl der Verbindungen der optischen Schicht im Gerät k, und $a_{1t}^{i}$ ist der Wert von ai für m=1, d. h. eine erste Verbindung der optischen Schicht zum Zeitpunkt t, und dasselbe gilt für $b_{1t}^{i}$, $c_{1t}^{i}$, $d_{1t}^{i}$, $a_{mt}^{i}$ ... $d_{mt}^{i}$ ; und eine dritte Methode besteht darin, die Leistungswerte der vier Dimensionen jeder optischen Schichtverbindung zufällig zu sampeln, wobei die Leistungswerte derselben Stichprobenfolge zu unterschiedlichen Zeitpunkten innerhalb derselben Zeitperiode von derselben optischen Schichtverbindung stammen.

7. Ein Verfahren zur Vorhersage der Leistung eines optischen Übertragungsnetzes, angewendet auf einen Multi-Domain-Management-Server, **gekennzeichnet durch** Folgendes:

(1101) das Erhalten von Modellaktualisierungsinformationen und Single-Domain-Topologieinformationen, die von einem Single-Domain-Management-Server gemeldet werden, wobei die Modellaktualisierungsinformationen durch Training des Leistungs-Vorhersagemodells des Single-Domain-Management-Servers auf Basis von Leistungsdaten jedes Netzwerkelements in einer einzelnen Domäne mittels horizontaler föderierter Lerntechnologie gewonnen werden und dazu konfiguriert sind, das Leistungs-Vorhersagemodell zu aktualisieren; und (1102) das Erzeugen eines Digital-Twin-Modells des optischen Transportnetzes basierend auf den Modellaktualisierungsinformationen und den Single-Domain-Topologieinformationen, wobei das Digital-Twin-Modell des optischen Transportnetzes dazu konfiguriert ist, die Leistung eines optischen Übertragungsnetzes vorherzusagen.

8. Verfahren zur Vorhersage der Leistung des optischen Übertragungsnetzes gemäß Anspruch 7, wobei das Leistungs-Vorhersagemodell ein Single-Domain-Leistungs-Vorhersagemodell umfasst; wobei das Erhalten der Modellaktualisierungsinformationen Folgendes umfasst:

das Erhalten eines Single-Domain-Digital-Twin-Modells basierend auf einem aktualisierten Single-Domain-Leistungs-Vorhersagemodell; wobei das Erzeugen des Digital-Twin-Modells des optischen Transportnetzes basierend auf den Modellaktualisierungsinformationen und den Single-Domain-Topologieinformationen Folgendes umfasst: das Zusammenfügen der von dem Single-Domain-Management-Server jeder einzelnen Domäne gemeldeten Single-Domain-Digital-Twin-Modelle gemäß den Single-Domain-Topologieinformationen, um das Digital-Twin-Modell des optischen Transportnetzes zu erhalten.

9. Das Verfahren zur Vorhersage der Leistung des optischen Übertragungsnetzes gemäß Anspruch 7, wobei das Leistungs-Vorhersagemodell ein Netzwerkleistungs-Vorhersagemodell umfasst; die Modellaktualisierungsinformationen umfassen: eine Parameteraktualisierungsmagnitude des Netzwerkleistungs-Vorhersagemodells; die Erzeugung des Digital-Twin-Modells des optischen Transportnetzes basierend auf den Modellaktualisierungsinformationen und den Single-Domain-Topologieinformationen umfasst:

• die Aktualisierung des Netzwerkleistungs-Vorhersagemodells entsprechend der Parameteraktualisierungsmagnitude des Netzwerkleistungs-Vorhersagemodells; und • die Erzeugung des Digital-Twin-Modells des optischen Transportnetzes gemäß dem aktualisierten Netzwerkleistungs-Vorhersagemodell und den Single-Domain-Topologieinformationen.

10. Ein System zur Vorhersage der Leistung eines optischen Übertragungsnetzes, **gekennzeichnet durch** Folgendes: einen Single-Domain-Management-Server (1201) und einen Multi-Domain-Management-Server (1202); wobei der Single-Domain-Management-Server (1201) mit dem Multi-Domain-Management-Server (1202) kommuniziert; der Single-Domain-Management-Server (1201) so konfiguriert ist, dass er ein Leistungs-Vorhersagemodell erhält, Modellaktualisierungsinformationen des Leistungs-Vorhersagemodells über horizontale föderierte Lerntechnologie (horizontal federated learning) erhält, wobei die Modellaktualisierungsinformationen durch Training des Leistungs-Vorhersagemodells auf Basis von Leistungsdaten jedes Netzwerkelements in einer einzelnen Domäne gewonnen werden; die Modellaktualisierungsinformationen und die Single-Domain-Topologieinformationen an den Multi-Domain-Management-Server (1202) meldet, sodass der Multi-Domain-Management-Server (1202) ein Digital-Twin-Modell des optischen Transportnetzes erzeugt; und der Multi-Domain-Management-Server (1202) so konfiguriert ist, dass er die vom Single-Domain-Management-Server (1201) gemeldeten Modellaktualisierungsinformationen und Single-Domain-Topologieinformationen erhält; wobei die Modellaktualisierungsinformationen durch Training des Leistungs-Vorhersagemodells des Single-Domain-Management-Servers (1201) basierend auf Leistungsdaten jedes Netzwerkelements in einer einzelnen Domäne mittels der horizontalen föderierten Lerntechnologie gewonnen werden; das Digital-Twin-Modell des optischen Transportnetzes gemäß den Modellaktualisierungsinformationen und den Single-Domain-Topologieinformationen erzeugt; wobei das Digital-Twin-Modell des optischen Transportnetzes so konfiguriert ist, dass es die Leistung eines optischen Transportnetzes vorhersagt.

11. Ein elektronisches Gerät, **gekennzeichnet durch** Folgendes:

mindestens einen Prozessor (1301); und
einen mit dem mindestens einen Prozessor (1301) kommunizierenden Speicher (1302);
wobei eine vom mindestens einen Prozessor (1301) ausführbare Anweisung im Speicher (1302) gespeichert ist, und die Anweisung vom mindestens einen Prozessor (1301) ausgeführt wird, um den mindestens einen Prozessor (1301) zu befähigen, das Verfahren zur Vorhersage der Leistung des optischen Übertragungsnetzes gemäß einem der Ansprüche 1 bis 6 auszuführen oder das Verfahren zur Vorhersage der Leistung des optischen Übertragungsnetzes gemäß einem der Ansprüche 7 bis 9 auszuführen.

12. Ein computerlesbares Speichermedium, **dadurch gekennzeichnet, dass** ein Computerprogramm auf dem computerlesbaren Speichermedium gespeichert ist, wobei beim Ausführen des Computerprogramms durch einen Prozessor das Verfahren zur Vorhersage der Leistung des optischen Übertragungsnetzes nach einem der Ansprüche 1 bis 6 oder das Verfahren zur Vorhersage der Leistung des optischen Übertragungsnetzes nach einem der Ansprüche 7 bis 9 umgesetzt wird.

## Revendications

1. Un procédé de prédiction de la performance d'un réseau de transmission optique, appliqué à un serveur de gestion à domaine unique, **caractérisé par** ce qui suit: (101) l'obtention d'un modèle de prédiction de performance; (102) l'obtention d'informations de mise à jour du modèle de prédiction de performance au moyen d'une technologie d'apprentissage fédéré horizontal, les informations de mise à jour du modèle étant obtenues en entraînant le modèle de prédiction de performance sur la base des données de performance de chaque élément du réseau dans un seul domaine et étant configurées pour mettre à jour le modèle de prédiction de performance; et (103) la communication des informations de mise à jour du modèle et des informations de topologie du domaine unique à un serveur de gestion multi-domaines, de sorte que le serveur de gestion multi-domaines génère un modèle jumeau numérique du réseau de transport optique basé sur les informations de mise à jour du modèle et les informations de topologie du domaine unique, le modèle jumeau numérique du réseau de transport optique étant configuré pour prédire la performance du réseau de transmission optique.

2. Le procédé de prédiction de la performance du réseau de transmission optique selon la revendication 1, dans lequel le modèle de prédiction de performance comprend un modèle de prédiction de performance à domaine unique ; l'obtention des informations de mise à jour du modèle comprend : l'obtention d'un modèle jumeau numérique à domaine unique basé sur un modèle de prédiction de performance à domaine unique mis à jour ; l'obtention des informations de mise à jour du modèle de prédiction de performance comprend:

• la transmission du modèle de prédiction de performance à domaine unique à chaque élément du réseau dans le domaine unique;
• l'obtention d'une magnitude de mise à jour des paramètres du modèle de prédiction de performance à domaine unique signalée par chaque élément du réseau, chaque élément du réseau étant configuré pour entraîner séparément le modèle de prédiction de performance à domaine unique sur la base de données locales de performance et pour calculer la magnitude de mise à jour des paramètres;
• la mise à jour d'un paramètre du modèle de prédiction de performance à domaine unique conformément à la magnitude de mise à jour des paramètres signalée par chaque élément du réseau, afin d'obtenir le modèle de prédiction de performance à domaine unique mis à jour; et
• l'obtention du modèle jumeau numérique à domaine unique conformément au modèle de prédiction de performance à domaine unique mis à jour et aux informations de topologie du domaine unique.

3. Le procédé de prédiction de la performance du réseau de transmission optique selon la revendication 2, dans lequel la mise à jour des paramètres du modèle de prédiction de performance à domaine unique conformément à la magnitude de mise à jour des paramètres signalée par chaque élément du réseau pour générer le modèle de prédiction de performance à domaine unique mis à jour comprend: la mise à jour itérative du modèle de prédiction de performance à domaine unique; où la mise à jour itérative comprend: la transmission du modèle de prédiction de performance à domaine unique mis à jour à chaque élément du réseau dans le domaine unique, la réception à nouveau d'une magnitude de mise à jour des paramètres signalée par chaque élément du réseau, la mise à jour du modèle de prédiction de performance à domaine unique conformément à la magnitude de mise à jour des paramètres ainsi signalée, et le lancement d'un tour suivant de la mise à jour itérative jusqu'à ce qu'une condition d'arrêt de l'itération soit remplie.

4. Le procédé de prédiction de la performance du réseau de transmission optique selon la revendication 1, dans lequel le modèle de prédiction de performance comprend: un modèle de prédiction de performance du réseau; les informations de mise à jour du modèle comprennent: la magnitude de mise à jour des paramètres du modèle de prédiction de performance du réseau; l'obtention des informations de mise à jour du modèle de prédiction de performance comprend: l'entraînement du modèle de prédiction de performance du réseau sur la base des données de performance de chaque élément du réseau afin d'obtenir la magnitude de mise à jour des paramètres du modèle de prédiction de performance du réseau; la magnitude de mise à jour des paramètres du modèle de prédiction de performance du réseau étant configurée pour être signalée au serveur de gestion multi-domaines, de sorte que le serveur de gestion multi-domaines mette à jour le modèle de prédiction de performance du réseau conformément à la magnitude de mise à jour des paramètres du modèle de prédiction de performance du réseau.

5. Le procédé de prédiction de la performance du réseau de transmission optique selon l'une des revendications 1 à 4, dans lequel la mise à jour du modèle de prédiction de performance est effectuée conformément à la formule suivante

$$\omega_{j+1} = \omega_j + \sum_{k=1}^{K} \frac{n_k}{n} \Delta\omega_{j+1}^k$$

en supposant qu'il y ait au total K appareils mettant à jour le modèle de prédiction des performances selon un approche d'apprentissage fédéré horizontal, l'ensemble des séquences d'échantillonnage des données de performance de chaque appareil est $P_k$ at a $\left( x_{(0...t)}^i , y_{t+1}^i \right)$, $i \in P_k$, $y_{t+1}^i$ est un vecteur de prévision des données de performance pour la i-ième séquence d'échantillons générée par le dispositif k à l'instant (t+1), $x_t^i$ est un vecteur de données de performance pour la i-ième séquence d'échantillons à l'instant t ; une séquence d'échantillons désigne un ensemble d'échantillons prélevés dans une série chronologique entre l'instant 0 et l'instant t pour un même objet de prédiction ; la période d'échantillonnage de la séquence d'échantillons est [0...$t, t$ + 1], le nombre de séquences de l'échantillon est $n_k = |P_k|$ le nombre total de séquences d'échantillons dans une seule zone est de $n = \sum_{k=1}^{K} n_k$, $\omega_j$ et $\omega_{j+1}$, et les valeurs des paramètres obtenues par le modèle de prévision de performance après le j-ième cycle d'itération ou le (j+1)-ième cycle d'itération, $\Delta\omega_{j+1}^k = \omega_{j+1}^k - \omega_j = -ag_k$ il s'agit de la mise à jour du paramètre par laquelle un paramètre $\omega_j$ du modèle de prédiction de performance calculé par le dispositif k est appliqué à $\omega_{j+1}$ mis à jour, $a$, est le taux d'apprentissage du modèle de prédiction de performance, et $g_k$ est le gradient de $\omega_j$.

6. Le procédé de prédiction de la performance du réseau de transmission optique selon la revendication 5, dans lequel la mise à jour du modèle de prédiction de performance est effectuée sur la base de $y_{t+1}^i$ est effectuée, et une fonction de perte d'un vecteur de données de performance réelles $f_{t+1}^i$ et $F_k(\omega)$ à l'instant (t+1), où

$$F_k(\omega) = \sum_{i=1}^{n_k} (f_{t+1}^i - y_{t+1}^i)^2$$

le vecteur de données $x_t^i$ est échantillonné à partir de quatre dimensions: la performance optique entrante $a_i$, la performance optique sortante $b_i$, l'atténuation optique à l'extrémité de réception $c_i$ et le rapport signal/bruit optique à l'extrémité de réception $d_i$ ; le vecteur de données de performance est échantillonné selon l'une des trois méthodes suivantes Une première méthode consiste à acquérir successivement les valeurs de performance de chaque couche optique au cours de la même période d'échantillonnage à partir des quatre dimensions, puis à effectuer un traitement d'extraction de caractéristiques par convolution de somme pondérée sur les valeurs de performance de chaque dimension.

$x_t^i$ et $y_{t+1}^i$ les valeurs obtenues grâce au traitement d'extraction de caractéristiques par convolution sont les

suivantes:

$$x_t^i = \begin{bmatrix} a'^i_t \\ b'^i_t \\ c'^i_t \\ d'^i_t \end{bmatrix} \qquad y_{t+1}^i = \begin{bmatrix} a'^i_{t+1} \\ b'^i_{t+1} \\ c'^i_{t+1} \\ d'^i_{t+1} \end{bmatrix}$$

où , $\quad a' = \sum\limits_{i=1}^{m} \alpha_i a_i \quad b' = \sum\limits_{i=1}^{m} \beta_i b_i \quad c' = \sum\limits_{i=1}^{m} \gamma_i c_i \quad d' = \sum\limits_{i=1}^{m} \eta_i d_i \quad$ , $\alpha_i$, $\beta_i$, $\gamma_i$ et $\eta_i$ sont des paramètres prédéfinis dans le processus d'extraction de caractéristiques par convolution, et m est le nombre de liaisons optiques dans le dispositif k :

une deuxième méthode consiste à regrouper les valeurs de performance des quatre dimensions de chaque liaison optique à l'instant t en un long vecteur, et $x_t^i$ et $y_{t+1}^i$ sont les suivants

$$x_t^i = \begin{bmatrix} a^i_{1t} \\ b^i_{1t} \\ c^i_{1t} \\ d^i_{1t} \\ \dots \\ a^i_{mt} \\ b^i_{mt} \\ c^i_{mt} \\ d^i_{mt} \end{bmatrix} \qquad y_{t+1}^i = \begin{bmatrix} a^i_{1t+1} \\ b^i_{1t+1} \\ c^i_{1t+1} \\ d^i_{1t+1} \\ \dots \\ a^i_{mt+1} \\ b^i_{mt+1} \\ c^i_{mt+1} \\ d^i_{mt+1} \end{bmatrix}$$

m est le nombre de liaisons optiques dans l'appareil k, et $a^i_{1t}$ , et la valeur ai pour m=1, c'est-à-dire la première liaison optique à l'instant t, et il en va de même pour $b^i_{1t}$ , $c^i_{1t}$ , $d^i_{1t}$ , $a^i_{mt}$ $d^i_{mt}$ … ; et une troisième méthode consiste à échantillonner de manière aléatoire les valeurs de performance des quatre dimensions de chaque liaison optique, les valeurs de performance d'une même séquence d'échantillons provenant de la même liaison optique à différents moments au cours d'une même période.

7. Un procédé de prédiction de la performance d'un réseau de transmission optique, appliqué à un serveur de gestion multi-domaines, **caractérisé en ce qu'**il comprend : (1101) l'obtention des informations de mise à jour du modèle et des informations de topologie de domaine unique rapportées par le serveur de gestion à domaine unique, les informations de mise à jour du modèle étant obtenues en entraînant le modèle de prédiction de performance du serveur à domaine unique sur la base des données de performance de chaque élément du réseau dans le domaine unique au moyen de la technologie d'apprentissage fédéré horizontal, et étant configurées pour mettre à jour le modèle de prédiction de performance ; et (1102) la génération d'un modèle jumeau numérique d'un réseau de transport optique sur la base des informations de mise à jour du modèle et des informations de topologie de domaine unique, le modèle jumeau numérique étant configuré pour prédire la performance d'un réseau de transport optique.

8. Procédé selon la revendication 7, dans lequel le modèle de prédiction de performance comprend un modèle de prédiction de performance de domaine unique; l'obtention des informations de mise à jour du modèle comprend : l'obtention d'un modèle jumeau numérique de domaine unique basé sur le modèle de prédiction de performance de domaine unique mis à jour; la génération du modèle jumeau numérique d'un réseau de transport optique sur la base des informations de mise à jour du modèle et des informations de topologie de domaine unique comprend: l'assemblage des modèles numériques jumeaux de domaine unique rapportés par le serveur de gestion à domaine unique de chaque domaine unique, selon les informations de topologie de domaine unique, afin d'obtenir le modèle jumeau numérique du réseau de transport optique.

9. Procédé selon la revendication 7, dans lequel le modèle de prédiction de performance comprend un modèle de prédiction de performance réseau;

les informations de mise à jour du modèle comprennent: une quantité de mise à jour des paramètres du modèle de prédiction de performance réseau;

la génération du modèle jumeau numérique du réseau de transport optique sur la base des informations de mise à jour du modèle et des informations de topologie de domaine unique comprend:

- la mise à jour du modèle de prédiction de performance réseau selon la quantité de mise à jour des paramètres ; et
- la génération du modèle jumeau numérique du réseau de transport optique selon le modèle de prédiction de performance réseau mis à jour et les informations de topologie de domaine unique.

10. Un système de prédiction de la performance d'un réseau de transmission optique, **caractérisé en ce qu'**il comprend: un serveur de gestion à domaine unique (1201) et un serveur de gestion multi-domaines (1202); le serveur de gestion à domaine unique (1201) étant en communication avec le serveur de gestion multi-domaines (1202);

le serveur de gestion à domaine unique (1201) étant configuré pour: obtenir un modèle de prédiction de performance, obtenir des informations de mise à jour du modèle par le biais de la technologie d'apprentissage fédéré horizontal, les informations étant obtenues en entraînant le modèle sur la base des données de performance de chaque élément du réseau dans le domaine unique; rapporter les informations de mise à jour du modèle et les informations de topologie du domaine unique au serveur de gestion multi-domaines (1202), de sorte que ce dernier génère un modèle jumeau numérique du réseau de transport optique;

le serveur de gestion multi-domaines (1202) étant configuré: obtenir les informations de mise à jour du modèle et les informations de topologie du domaine unique rapportées par ledit serveur de gestion à domaine unique (1201), générer le modèle jumeau numérique du réseau de transport optique sur la base de ces informations, le modèle étant configuré pour prédire la performance du réseau.

11. Un dispositif électronique, **caractérisé en ce qu'**il comprend:

au moins un processeur (1301); et

une mémoire (1302) en communication avec le ou les processeurs (1301);

dans lequel une instruction exécutable par le ou les processeurs (1301) est stockée dans la mémoire (1302), et l'exécution de l'instruction par le ou les processeurs (1301) permet de réaliser le procédé de prédiction de la performance d'un réseau de transmission optique selon l'une quelconque des revendications 1 à 6, ou selon l'une quelconque des revendications 7 à 9.

12. Un support de stockage lisible par ordinateur, **caractérisé en ce qu'**un programme informatique y est stocké, et lorsque ce programme est exécuté par un processeur, il permet de réaliser le procédé de prédiction de la performance d'un réseau de transmission optique selon l'une quelconque des revendications 1 à 6, ou selon l'une quelconque des revendications 7 à 9.

obtaining a performance prediction model

101

obtaining model update information of the performance prediction model through horizontal federated learning technology; where the model update information is obtained by training the performance prediction model based on performance data of each network element in a single domain and is configured to update the performance prediction model

102

reporting the model update information and single-domain topology information to a multi-domain management server, so that the multi-domain management server generates an optical transport network digital twin model based on the model update information, the optical transport network digital twin model is configured to predict performance of the optical transport network

103

FIG. 1

FIG. 2

$$\omega_{j+1} = \omega_j + \sum_{k=1}^{K} \frac{n_k}{n} \Delta\omega_{j+1}^k$$

$$\omega'_{j+1} = \omega'_j + \sum_{k=1}^{K} \frac{n_k}{n} \Delta\omega'^k_{j+1}$$

cross-domain OTN digital twin network layer

multi-domain orchestration system

vendor A single domain management and control system

vendor B single domain management and control system

OTN single domain of vendor A

OTN single domain of vendor B

$\Delta\omega_{j+1}^1$  $\Delta\omega_{j+1}^k$  $\Delta\omega'^1_{j+1}$  $\Delta\omega'^k_{j+1}$

$$\omega_{t+1} = \omega_t + \sum_{k=1}^{K} \frac{n_k}{n} \Delta\omega_{t+1}^k$$

FIG. 3

FIG. 4

FIG. 5

FIG. 6

START

j=0, the single-domain management and control system parameter model initializes $\omega_0$ and sends it to each node in the domain

The single-domain management and control system determines the reported

$$\left( \sum_{k=1}^{K} \frac{n_k}{n} \Delta \omega_{j+1}^{k} \right) \rightarrow 0 ?$$

Yes

No

The single-domain management and control system calculates $\omega_{j+1} = \omega_j + \sum_{k=1}^{K} \frac{n_k}{n} \Delta \omega_{j+1}^{k}$ , and sends it to each network element node

Each network element node executes j++ rounds of iteration

END

FIG. 7

```
        ┌─────────────────────────────────────────┐
        │     (j+1)th round of iteration begins    │
        └─────────────────────────────────────────┘
                          │
                          ▼
 ┌──────────────────────────────────────────────────────────┐
 │ The gradient of $\omega_j$ is calculated by the loss      │
 │ function of the RNN model of node k, and                  │
 │                       $g_k = \nabla F_k(\omega_j)$        │
 └──────────────────────────────────────────────────────────┘
                          │
                          ▼
 ┌──────────────────────────────────────────────────────────┐
 │ The parameter update amount                               │
 │ $\Delta\omega^{k}_{j+1} = \omega^{k}_{j+1} - \omega_j     │
 │  = -ag_k$                                                 │
 │ of the model is calculated, and is reported to the local  │
 │ management and control system by node k                   │
 └──────────────────────────────────────────────────────────┘
                          │
                          ▼
 ┌──────────────────────────────────────────────────────────┐
 │ After obtaining $\Delta\omega^{k}_{j+1}$ of all K nodes,  │
 │ the management and control system in the current domain   │
 │ updates the public model parameters $\omega_{j+1}$        │
 │ using $\omega_{j+1} = \omega_j + \sum_{k=1}^{K}           │
 │ \frac{n_k}{n}\Delta\omega^{k}_{j+1}$, and sends them to   │
 │ each network element node                                 │
 └──────────────────────────────────────────────────────────┘
                          │
                          ▼
        ┌─────────────────────────────────────────┐
        │     (j+1)th round of iteration ends      │
        └─────────────────────────────────────────┘
```

FIG. 8

START

j=0, the parameter model of the multi-domain orchestration system initializes $\omega_0$ and distributes it to each single domain

The multi-domain orchestration system determines the reported $(\sum_{k=1}^{K} \frac{n_k}{n} \Delta \omega_{j+1}^k) \rightarrow 0$ ?

Yes

No

The multi-domain orchestration system calculates $\omega_{j+1} = \omega_j + \sum_{k=1}^{K} \frac{n_k}{n} \Delta \omega_{j+1}^k$ , and distributes it to each single domain.

Each single domain executes j++ rounds of iterations.

END

FIG. 9

$$( j+1)\text{th round of iteration begins}$$

The gradient of $\omega_j$ is calculated by the loss function of RNN model of the single-domain k, $g_k = \nabla F_k(\omega_j)$

The parameter update amount $\Delta\omega_{j+1}^k = \omega_{j+1}^k - \omega_j = -ag_k$ of the model is calculated and reported to the multi-domain orchestration system by the single domain k

After obtaining the encrypted $\Delta\omega_{j+1}^k$ of all single domains, the multi-domain orchestration system updates the public model parameters $\omega_{j+1}$ using $\omega_{j+1} = \omega_j + \sum_{k=1}^{K}\frac{n_k}{n}\Delta\omega_{j+1}^k$ , and sends them to each single domain

$$( j+1)\text{th round of iteration ends}$$

FIG. 10

obtaining the model update information and single-domain topology information reported by the single-domain management server; the model update information is obtained by training the performance prediction model of the single-domain management server based on the performance data of each network element in the single domain through horizontal federated learning technology, and is configured to update the performance prediction model

1101

generating an optical transport network digital twin model based on the model update information and single-domain topology information; the optical transport network digital twin model is configured to predict the performance of the optical transport network

1102

FIG. 11

single- domain management server

1201

multi-domain management server

1202

FIG. 12

1301

processor

1302

memory

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Centralized and Distributed Machine Learning-Based QoT Estimation for Sliceable Optical Networks. **PANAYIOTOU TANIA et al.** 2019 IEEE GLOBAL COMMUNICATIONS CONFERENCE (GLOBECOM. IEEE, 09 December 2019

- Demonstration of Imbalanced Data Learning-Based Failure Prediction in Self-Optimizing Optical Networks with Large Scale Field Topology. **YAN BOYUAN et al.** 2018 ASIA COMMUNICATIONS AND PHOTONICS CONFERENCE (ACP). IEEE, 26 October 2018